# EUROPEAN PATENT SPECIFICATION

(11) **EP 3 563 131 B1**
(45) Date of publication and mention of the grant of the patent: **31.12.2025**
(21) Application number: 17822343.4
(22) Date of filing: 29.12.2017
(51) Int. Cl.: G01L 5/00

(54) **MEASURING ELEMENT, MEASURING SYSTEM, AND METHOD OF PROVIDING A MEASURING ELEMENT FOR MEASURING FORCES**
MESSELEMENT, MESSSYSTEM UND VERFAHREN ZUR BEREITSTELLUNG EINES MESSELEMENTS ZUR MESSUNG VON KRÄFTEN
ÉLÉMENT DE MESURE, SYSTÈME DE MESURE ET PROCÉDÉ DE FOURNITURE D'UN ÉLÉMENT DE MESURE PERMETTANT LA MESURE DE FORCES

(30) Priority: 29.12.2016 DE 102016226282
(43) Date of publication of application: 06.11.2019
(73) Proprietor: TE Connectivity Germany GmbH, 64625 Bensheim (DE)
(72) Inventor: BLEICHER, Martin, 74579 Fichtenau (DE); GOEPPEL, Christoph, 91572 Bechhofen A.D.H. (DE); GREINER, Felix, 64297 Darmstadt (DE); LEIMINGER, Daniel, 86748 Marktoffingen (DE); RAAB, Stefan, 86720 Nördlingen (DE)
(74) Representative: Grünecker Patent- und Rechtsanwälte PartG mbB
(86) International application number: PCT/EP2017/084791
(87) International publication number: WO 2018/122365

(56) References cited:
- JP-A- 2011 107 039
- JP-U- S5 514 578
- US-A- 2 316 975
- US-A- 2 419 061
- US-A- 2 666 262
- US-A- 2 815 424
- US-A- 2 927 458
- US-A- 4 019 377
- US-A- 4 251 918

## Description

The present invention generally relates to the field of measuring technology in which in particular forces with relatively small values of, for example, some centinewtons up to some hundreds of Newtons are to be measured, as is required for example for the measurement of spring forces of contacts in plug connections.

The measurement of relatively small forces, which typically act perpendicularly onto a material, is in many technical fields an important issue in order to be able to make appropriate statements regarding the material point concerned and/or the component exerting the force. An important field of application in this respect is the ascertaining of contact forces in many types of connections, for instance plug connections, in which an electrical and mechanical contact is typically produced by a contact pin or the like being loaded with a substantially perpendicularly-acting force which is generated by a complementary contact element. The elastic force which arises thereby has the function of producing and maintaining a reliable electrical contact between the two surfaces which are in contact. The contact force applied thereby should be both sufficiently large in order to produce, at the envisaged position, a relatively planar contact between the two contact surfaces and thereby to remove possible impurities, deposits and the like, so that a contact with as low a resistance as possible is brought into being. On the other hand, the contact force applied thereby should however not be too large, because in that case relatively large forces are required during the deflection of the component exerting the contact force and in particular excessive wear on the contact surfaces can also occur in the event of repeated plugging-together and decoupling of the corresponding components. On the other hand, however, a minimal contact force must be upheld in order to repeatedly provide the desired electrical and mechanical connection during the entire duration of the contact.

In order to therefore ascertain and also monitor the corresponding occurring contact forces, so-called measuring elements or measuring transformers are employed which for example take over the role of a contact element, for instance a plug, and which are connected to the complementary plug device which is to be examined. In some known systems as described by way of example in printed document DE 10 2011 054 319 A1, a measuring arm is used which, at given positions which come into contact with the complementary component, is equipped with a measuring cell which can output a corresponding signal when loaded with a force. In other words, in these known systems, the measuring cell which is provided for example in the form of a piezoresisitive material or the like, is located precisely at the point at which a contact with the surface of the complementary component is produced, meaning that a more or less direct registering of the resulting normal force is possible. A relatively exact correspondence between the registered force and the forces actually occurring between a plug connection arises only if the entire structure of the measuring arm, including the measuring cell, is modelled as identically as possible on the geometry of the corresponding point in the component to be examined, because otherwise in the event of diverging geometry there arises a force which does not correspond to the actual conditions. Furthermore, the direct contact between the measuring cell and the complementary region of the plug connection can lead to increased wear on the measuring cell, particularly if frequent measurements are carried out in order to economically exploit the measuring system efficiently. In order to keep the degree of wear low, a suitable coating is typically applied in order to increase the mechanical strength of the measuring cell. However, through the application of an appropriate mechanical or more robust coating the response sensitivity of the measuring cell and thus the exactness and the resolution of the measurement results obtained is possibly reduced.

In other known measuring systems, an "indirect" registering of the forces is carried out by a suitably formed pair of measuring arms being provided which, in terms of their geometry and material characteristics, can be modelled to a large extent on the actual conditions, which however enable a relative deflection relative to one another which is then detected at a suitable point of the measuring system. In this regard, document DE 25 56 836, for example, describes a measuring element and a measuring head for measuring small forces, in particular contact spring forces, wherein the measuring element consists of a one-piece plate which has two legs formed by slots that are connected to one another via a short web. On the short web and at the adjacent rigid regions there is formed a strain gauge from which one part is thus deformed by the spring force exerted onto the legs due to the deformation of the short web and thus can output a signal which is proportional to this deformation. Due to the two legs which are separated by a slot, the connecting web is for instance of the size of the slot and the strain gauge has an extent which is substantially greater than the web connecting the two legs.

The conventional systems described by way of example with reference to the two printed documents do permit an efficient ascertainment of spring forces in a correspondingly limited measurement range, but with the response sensitivity and the resolution and measurement exactness possibly being relatively low in the "directly" measuring system due to the structure of the measuring cell and, in the event of frequently repeated measurement, there occurring, due to the unavoidable wear, a change in the overall geometry of the measuring cell which may not be noticed for a long time and which in turn has an influence on the forces ascertained, is generated.

The previously described "indirectly" measuring concept does allow a relative exact modelling of the actual conditions in the region of the measuring arms, i.e. the coupling between the corresponding plug connection can be modelled relatively realistically, but reduced measurement exactness must be expected due to the geometric configuration and the relatively long strain gauge.

JP 2011-107039 A discloses a device for measuring the contact pressure by inserting a probe for measuring pressure on the female terminal having an elastic contact piece, the probe includes a pair of measuring arms, connecting ends, and a strain gage put at a connection end of both the measuring arms. One measuring arm is brought into contact with the elastic contact piece, and the other measuring arm is brought into contact with a sandwiched face arranged to oppose the elastic contact piece in the female terminal. The rigidity of one measuring arm is set high as compared with that of the other measuring arm, and the other measuring arm arranges a projection abutting on the sandwiched face at two parts positioned at both sides of a length direction for a contact point to the elastic contact piece of one measuring arm. The aim is to accurately measure contact pressure without receiving restriction on the size of a female terminal.

JPS5514578 U discloses a brush holding device. A pair of arms which are formed in an X-shape by a shaft fulcrum and one end is inserted between a brush and a brush presser and the other end is used as a grip portion. An elastic body for urging a predetermined resistance against the pressing force from the other end of the arm when the brush is inserted between the brush and the brush holder and a display for displaying according to the opening angle of the arm. A brush holder pressure measuring device is provided for measuring a pressing force of a brush in a direct current machine or the like.

US 2 316 975 A discloses an electrical strain sensitive gauge comprising a frame having a flexible member and relatively movable specimen engaging portions whereby said flexible member is variably strained in accordance with said relative movement, and a continuous solid filament of electrical conducting material bonded throughout its effective length to said variably strained flexible member so as to follow fully the strains thereof and the electrical resistance of said filament varying in accordance with changes of strain therein, whereby changes in resistance of said filament is an indication of the extent of relative movement between said specimen engaging ends of said member.

US 2 815 424 A discloses a strain gage for measuring the strain in elastomers comprising a pair of needles having spaced points to be stuck into spaced points on the surface of an elastomer between which strain is to be measured, beads on the needles spaced from the ends of the points of the needles for limiting the penetration of the points into the elastomer, a spring member arched between the needles so as to be deflected in proportion to the movement of the needles toward and away from each other, and a strain measuring element responsive to the deflection of said spring member.

US 4 019 377 A discloses a temperature compensating strain gage for measuring elongation of parent elastomeric material. The strain gage comprises an elongated elastomeric strap having the same or similar temperature characteristics as the parent elastomeric material, a clamp secured to the parent material for securing one end of the strap, a transducer, a pair of side by side spaced apart transducer mounts, one of the mounts is attached to the free end of the strap and the other is attached to the parent material, a heat transferring medium is positioned between the parent material and the strap intermediate the ends and a strain gage element is mounted on the transducer.

US 2 666 262 A discloses a condition responsive apparatus comprising, in combination, two relatively movable elements for transmitting to the apparatus a condition external thereof, a member pivotally connecting said elements together and maintaining them in operative relation so that relative rotation occurs between said elements in response to a change of said external condition, a flexible column buckled in a state of elastic instability interposed between said elements so that rotation of said elements applies an end force to the column along its lengthwise axis and thereby effects a predetermined change of strain at one of the surfaces of the column as a result of a given change in the extent of its buckling, said movable elements supporting the column only at its ends at all times, a resilient element interposed between said movable elements and exerting forces on them to oppose the tendency of the column buckling condition to pivotally move said elements, said pivotal connecting member being disposed to carry the resultant of the forces acting on the movable elements by said column and resilient element so that said apparatus is in self contained equilibrium, and electrical impedance strain gage means connected to said buckled column to be responsive to changes of the buckling strains at the surface thereof, said resilient element comprising an additional buckling column opposing the buckling force of the first column.

US 2 927 458 A discloses a load measuring device taking the form of a pair of beam members which are rigid in comparison with a cross-beam that is interposed therebetween. Thus, any primary deformation or bending caused by a load applied to the beam members will take place largely in the crossbeam and by suitable location of the cross-beam with respect to the beam members, the effect of the applied load may be magnified in the cross-beam. The strain in the cross-beam may be conveniently measured by suitable gauges and from a measurement thus taken the applied load may be determined. Restraining means are positioned between the beam members and serve to limit the maximum free deflection thereof; when the restraining means become operative and arrest the free deflection or the beam members, the applied load is then resisted by the restraining means together with the beam members and the cross-beam. Thus, the strain versus load characteristic of the cross-beam is modified in the operative region of the restraining means.

US 2 419 061 A discloses a U-shaped member formed preferably of wide, thin material with a fliuid pressure actuated expansible member preferably a "Sylphon" bellows disposed between the opposed sides of the U-shaped member. A strain gage is located at the cross portion of the U-member. This arrangement is particularly adapted for use of a bonded wire resistance type strain gage which may be easily cemented to the curved surface of said cross portion.

US 4 251 918 A relates to a strain gage extensometer used for measuring uniaxial and biaxial strains in material test specimens. The extensometer is composed of two independent axial strain measuring sensors joined together by a resilient member which is instrumented to provide transverse strain data. All compliant, instrumented members are coupled to the deformations of the specimen, which thus causes strain in the instrumented members which is sensed by suitable strain gages and instruments. A special attachment mechanism is provided by the thin, parallel elements machined into one of the sensors.

With regard to the aforementioned situation, an aim of the present invention is to specify means with which forces, for example of spring forces of plug connections, can be ascertained with increased response sensitivity and/or improved repeatability and/or increased exactness, with as realistic a modelling of the plug connection systems as possible being meant to be possible.

The aforementioned aim is achieved according to one aspect of the present invention through a measuring element for detecting forces. The measuring element according to the invention comprises a first measuring arm which extends in a longitudinal direction of the measuring element and a second measuring arm which extends in a longitudinal direction, wherein the first and the second measuring arms can be deflected relative to one another in a direction perpendicular to the longitudinal direction. The measuring element further comprises a deformation section that connects the first measuring arm and the second measuring arm to one another in an elastically deformable manner and which has a first side facing the first and second measuring arms and a second side facing away from the first and second measuring arms. The measuring element may further comprise at least one transformer unit which is arranged on the first side and/or the second side of the deformation section, and which responds to deformation and which is situated fully within the deformation section. The measuring element according to the invention further comprises an actuator element configured to controllably achieve an elongation/contraction in a certain region of the measuring element.

The measuring element according to the invention is therefore distinguished by there being provided two measuring arms that are deflectable relative to one another and that can be produced and arranged in any suitable form, in order to thus realistically model a corresponding application purpose. In this case, the two measuring arms are connected to one another by a deformation section in an elastically deformable manner, so that the relative deflection can be detected via the deformation section. For this purpose, at least one transformer unit is fully arranged in the measuring element according to the invention, on the side of the deformation section facing the measuring arms or the facing-away side of the deformation section.

In other words, the measuring element according to the invention corresponds to the "indirect" measuring concept and thus enables a high degree of robustness and adaptability of the corresponding measuring arms to the envisaged application purpose, while on the other hand the deformation caused by the relative deflection of the first and of the second measuring arms can be efficiently captured by suitable positioned transformer units. The deformation section is designed here such that the at least one transformer unit is fully accommodated on the deformation section, as a result of which it is on the one hand defined that the deformation section itself is of a sufficient size to receive the first transformer element and is furthermore suitably formed to enable the positioning of the transformer unit both on the side facing the measuring arms and/or on the facing-away side. By means of the suitably selected size of the deformation section, on the one hand the expected deformation is "distributed" on a larger region, as a result of which there emerges an improved resolution. On the other hand, the one or more transformer units cover a larger surface of the deformation section and therefore output one or more signals which enable an evaluation of the registered force region with greater exactness and/or higher resolution, i.e. with greater linearity, lower temperature dependency and lower dependency on non-optimal plugging, for instance components which are plugged in askew in the event of manual handling.

In an advantageous variant, two or more transformer units are provided which are arranged on the first side and/or the second side of the deformation section and which respond to deformation.

In this variant of the measuring element according to the invention, two or more transformer units are therefore provided on the facing-away side or the facing side or on both sides, so that there is overall likewise a suitable geometry of the deformation section here such that the arrangement of these two or more transformer units fully within the deformation section is made possible. The selection of the number and the positions of the corresponding transformer units can therefore be carried out with regard to obtaining corresponding signals in an optimised manner. In other words, through the arrangement of at least two transformer units, a spatially resolved ascertainment of the deformation components can take place in the deformation section such that the evaluation can gain exactness and/or the response sensitivity can be increased through the presence of two or more independent pieces of information. Therefore overall, through the suitable design of the deformation section which can fully receive at least one transformer unit and in further preferred embodiments two or more transformer units, improved response behaviour and greater exactness, i.e. with greater linearity, lower temperature dependency and lower dependency on non-optimal plugging, for instance components which are plugged in askew in the event of manual handling, can be achieved when evaluating the deformation of the deformation section.

In an advantageous embodiment, a geometric design of the deformation section, with given material characteristics, is modelled on a geometric design ascertained by simulating the deformation behaviour for a given range of forces, which must be measured through relative deflection of the first and second measuring arms. In other words, the geometric design of the deformation section is ascertained, on the basis of the material characteristics of the deformation sections and with regard to the forces which are to be expected and which are to be measured, through simulation and this simulated geometric configuration is then modelled using the appropriate material, so that a high degree of "similarity" of the "behaviour" of the simulated geometric design and the actually produced geometric design is achieved. In other words, due to this inventive concept, the geometry of the deformation section, which is significant for translating the force to be measured into a corresponding signal, can be efficiently adapted by modelling a simulated structure, which can be calculated with virtually any level of exactness desired, for the application which is of interest. In this manner, a desired degree of precision of the measurement results, which are to be expected, with regard to the previously ascertained measurement range can, however, be achieved by suitably selecting the geometric design. In particular, good response behaviour is achieved on the basis of the appropriately arranged transformer units.

In a further advantageous embodiment, a position of the at least one transformer unit is in a region ascertained through simulation and/or in a region with the locally highest deformation. In other words, the geometric designing of the deformation sections is carried out such that the one or more transformer units can be fully provided on the deformation section, wherein additionally corresponding positions are selected for the transformer units, which, in combination, output an optimised signal and/or sustain a locally highest degree of deformation in the event of relative deflection of the two measuring arms. These regions with the locally highest deformation in the deformation section can be ascertained, for example, experimentally for a given geometric design or on the basis of simulation. Here, the regions "with locally highest deformation" must be understood such that if a region with the locally highest deformation is provided for a position of a single transformer unit, in the region of the largest value of deformation, be it contraction or expansion, is achieved for all positions within that face of the deformation section which is covered by the transformer unit. It is similarly the case that if two or more regions are provided with locally highest deformation, these regions each contain a maximum local value of the deformation in the face covered by the respective transformer unit and all other deformation values within the covered face of the corresponding two or more regions are smaller than the local maximum values ascertained in the respective regions.

Through this selection of the positions of the transformer units, an optimised response behaviour and a high exactness and an improved resolution are achieved, because, in particular in the region of the locally maximum deformation, a maximum gradient of the deformation must be expected when the relative deflection is changed in the region "sensed" by the respective transformer unit, which in turn is reflected in a corresponding high response behaviour and high resolution.

In the invention, the measuring element has a first measurement range which is fixed in that when a force which is to be measured through relative deflection of the first and the second measuring arm and which is equal to or smaller than a first threshold exerts an effect, the first measuring arm and the second measuring arm remain spaced apart from one another. In other words, in this embodiment, even when a force which is to be measured exerts an effect within the given regions, an intermediate space is always preserved between the first measuring arm and the second measuring arm, so that a direct contact of the measuring arms is avoided. In this manner, even very small forces can be reliably registered with suitable resolution because the relative deflection does not lead to any direct contact and thus does not lead to any "falsification" of the small force which exerts an effect.

Further, in the invention, the measuring element has a second measurement range which is fixed in that when a force which is to be measured through relative deflection of the first and second measuring arms and which is greater than the first threshold exerts an effect, a front region of the first measuring arm is in contact with a front region of the second measuring arm. In other words, in this variant there is at least a second measurement range available which distinguishes itself in that the first measuring arm and the second measuring arm are in contact with one another in the front region. In other words, the second measurement range therefore differs from the first measurement range at least in that the first measuring arm and the second measuring arm are in contact, which indicates a mechanical state which is detectable. In this manner, there arises supplementary information during the registering of the corresponding forces, according to which, possibly in the event of an otherwise barely altered relative deflection of the first measuring arm and of the second measuring arm, it is nevertheless possible to identify the occurrence of a larger force compared to a relative deflection which does not lead straight to a contact between the first measuring arm and the second measuring arm. This supplementary information can therefore be efficiently consulted to evaluate the forces.

In a further clear embodiment, the measuring element has a third measurement range which is fixed in that when a force which is to be measured through relative deflection of the first and the second measuring arm and which is greater than the first threshold and equal to or greater than a second threshold which is above the first threshold exerts an effect, the front region of the first measuring arm is in contact with the front region of the second measuring arm and a size of an intermediate space formed by a rear region of the first measuring arm and a rear region of the second measuring arm is characteristic of the force which is to be measured. In other words, in this variant according to the invention the relatively large force to be measured produces a contact between the first and the second measuring arm, but when the force is further increased said contact differs little from the state of the contact caused by a smaller force, but with the size of the intermediate space of the rear regions being a measure for actual size. In other words, even if the relative deflection of the first and of the second measuring arms, which is measured via the deformation section, is still only relatively small, since for example substantially only a deformation of the first and of the second measuring arms takes place, an additional classification of the acting forces can nevertheless be carried out by further evaluating the size of the intermediate space. In other words, three pieces of information are fundamentally available for the ultimate estimation of the force, i.e. the deformation of the deformation section, the knowledge that the front regions of the first and of the second measuring arm are in contact, and the adjusting size of the intermediate space.

Due to the establishment of two or more measurement ranges in the same measuring element, a very wide range of forces can thus be covered compared to conventional systems by evaluating additional information which can be ascertained by different mechanical states of the first and of the second measuring arm.

In an advantageous embodiment, there is provided a first detecting device which is formed to register the contact of the front region of the first measuring arm with the front region of the second measuring arm. In other words, with the aid of the first detecting device, it is possible to register and evaluate the state of the measuring element with regard to a possible available contact of the first and of the second measuring arms. The detecting device can in this case be a pressure-sensitive system that is provided on the first measuring arm or the second measuring arm or on both and that outputs a pressure-dependent signal. For example, a piezoelectric material can be provided, which outputs a pressure-dependent electrical signal when pressure is loaded on. It should be noted in this case that in contrast to the previously described "direct" measuring concepts the mechanical stress is relatively small here, because for example only a precisely defined mechanical contact takes place, perpendicular to the longitudinal direction of the measuring element, by the first measuring arm and the second measuring arm, while no direct contact to an object to be measured occurs, and in particular no displacement in the longitudinal direction of the detecting device. Other pressure-sensitive sensors which are on a capacitive, acoustic, piezoresistive, resistive or optical basis or on the basis of high-frequency electromagnetic fields can also be used in order to output an appropriate signal. In other variants, the knowledge of the contact between the first measuring arm and the second measuring arm can be obtained for instance on the basis of an electrical resistance measurement, if, for example, the measuring arms connected to one another via the deformation section have a relatively high resistance, while, in the case of a "short circuit" brought about by contact, a significantly lower resistance arises. Similarly, the first measuring arm and/or the second measuring arm and/or the deformation section can, at least in sections, contain an insulating material, so that a very high resistance arises when the measuring arms are in the "open" state, whereas a significantly lower resistance can be measured in the "closed", i.e. contacted state.

In the invention, a second detecting device is provided which is formed to register the size of the intermediate space. In other words, with this second detecting device it is possible to register the size of the intermediate space, which is dependent on the force which is exerting an effect and thus to provide it as information for the evaluation of the force which is exerting an effect. The second detecting device can thereby be designed for example on the basis of electrical measurement principles, for instance a capacity measurement, resistance measurement, acoustic impedance measurement, inductive coupling, electromagnetically high-frequency impedance measurement or optical measurement and the like, while in other variants corresponding devices which detect the deformation can be provided in the form of a resistive, piezoresisitive, optical, acoustic or electromagnetically high-frequency active strain gauges, and the like, in order to evaluate the size of the intermediate space which arises according to the force which is exerting an effect through a change in the form of the first and/or of the second measuring arm.

In a further clear embodiment, a first surface of the first measuring arm is opposite a second surface of the second measuring arm, the first and the second surface are formed complementary to one another and have surface regions with a surface normal which forms an angle to the relative deflection. In other words, in this variant, those surfaces of the measuring arms which face one another are formed complementary to one another, so that for example, if the two surfaces are hypothetically laid one on top of the other, a certain form-fit would be created. Furthermore, in this case certain surface regions are oriented such that they are angled relative to the direction of the deflection, i.e. relative to the direction of the force which is exerting an effect and which leads to the relative deflection of the first and of the second measuring arm. This geometric characteristic can for example be achieved by arched sections or conical sections in the respective surfaces with their associated complementary surface forms or also by two otherwise level smooth surfaces, which, however, are inclined to the direction of the deflection. Through this design of the surfaces which face one another, the rigidity of the measuring arms and thus their mechanical robustness can be increased. In other embodiments, the two facing surfaces are level faces with normals which are parallel to the direction of the measuring forces.

In a further advantageous embodiment, the measuring element is structured such that a total thickness of the first and of the second measuring arm is designed within an interaction region such that, in a state without action of a force that is to be measured, it varies and/or is variable. In other words, the measuring element according to this variant has at least different total thicknesses in the interaction region, i.e. in the region in which one or more forces to be measured exerts an effect on the first and/or the second measuring arm, so that different situations can be modelled with regard to an object which is to be measured. In other words, in the case of plug connections, regions with different lateral dimensions for example may be present, for instance in order to elict different contact forces along different positions in the longitudinal direction, so that such a situation can be modelled with a structure with a different total thickness in the interaction region. For example, there can be provided two or more discrete regions which do possess a uniform thickness within each individual region, but the thickness differs from region to region. Through the provision of a varying thickness it is also possible to evaluate the force, which is exerting an effect and which is to be examined, with regard to a change in the geometry in order to thus obtain a more reliable statement on the actual behaviour of a plug connection for example in which the lateral dimension, for example, can change after a certain service life due to frequent plugging and unplugging, for example. In a further variant, the total thickness is variable so that for example for a given position at which a force to be measured exerts an effect, one or more different thicknesses and possibly also a corresponding profile can be adjusted in order to obtain a more detailed statement on the behaviour of respective connection components. It should be noted here that a "change" in the total thickness is also possible in a state in which a force which is to be measured is already exerting an effect, wherein the total thickness is not given directly by the corresponding actual thickness, but rather possibly by a changed deflection, and the changed total thickness can be ascertained only after the discontinuation of the force which is to be measured, i.e. in the state without the force to be measured exerting an effect.

In a further advantageous variant, the interaction region has a varying total thickness which is caused by a varying thickness of the first and/or of the second measuring arm in the region of +/- 200 µm. With such a region of the varying total thickness, a suitable statement on the actual conditions, for example on spring forces in real plug connections, can be obtained for many measurement conditions, because this, for example, can be a typical region for the wear in plug connections.

In a further advantageous variant, in a first connection region, which is coupled with the first measuring arm, and/or a second connection region, which is coupled with the second measuring arm, and/or the deformation section, an actuator element with adjustable elongation/contraction is provided. With this actuator element, a controllable change in the dimension can thus be controllably caused in a respective section of the corresponding component, as a result of which the mechanical behaviour, for example, of the measuring element can be adjusted as a whole. For example, the actuator element can be arranged such that a change in its expansion/contraction leads to a change in the spacing of the two measuring arms and thus a different total thickness is obtained. In an advantageous variant, the total thickness of the measuring arms can be altered from 0.001 to 2.0 mm. In this manner, the response behaviour of the measuring element, for example, can be controllably adjusted, for instance in order to model a certain range of different lateral dimensions of a real structural element. As has already been demonstrated previously, due to the controllable characteristic of the actuator element, the change in the configuration of the measuring element, for example the total thickness of the first and second measuring arms, can be performed before a planned measuring and indeed before contact with the measurement object but also during contact with the measurement object. Suitable actuator elements are for example piezo-electrical components with which it is possible to adjust an elongation/contraction by applying a suitable control voltage, an electromagnetic or electrodynamic rotation actuator with spindle gear or a manual spindle gear. However, other mechanisms which provide a change of the dimensions in the suitable region can also be used.

With regard to the abovementioned mechanisms for changing the thickness, it should be remarked that small thickness variations, for instance +/- 15 µm, are preferably for portraying the upper and lower tolerance limits of a contact pin. Large thickness variations, for instance +/- 100 µm, are preferably for portraying different types contact pins with a measuring element.

In both previously mentioned ranges of the thickness variation, the two following approaches can for instance be efficiently employed:
thickness change, plugged in with the force applied, i.e. dynamic change of the thickness. As a result, a spring characteristic can be ascertained simply. This is of interest for qualifying a plug connector: a new product can be efficiently examined and presented to the client. For instance, the spring characteristic is adjusted depending on the client's tolerance range, or the change in thickness takes place depending on the product. A measuring element therefore covers a large range of products. It is thus also possible to examine new products for which there is not yet any specific measuring element.
thickness change not plugged in without force applied, i.e., static thickness change. Therefore a different measuring situation can be firmly and unchangeably adjusted. Foils are therefore suitable for application for this purpose in order to alter the thickness of one or both measuring arms, but also "statically" used actuator elements, in particular a manual spindle gear. Interesting considerations arise for the examination of products which accompanies manufacture:
   thickness change depending on the clients' measuring instructions for the same plug connector product
   thickness change depending on the product, i.e. one measuring element covers a large range of products.

Overall, the possibility of statically or dynamically changing the total thickness leads to a reduction in costs.

In clear embodiments the one or more actuator elements serve as a sensor. In other words, alongside the concept described up to now for signal generation and signal evaluation according to which the transformer unit transforms the mechanical voltage or the deformation into an electrical signal and this signal is evaluated to determine the force, the concept of compensation can be used in some embodiments with the aid of the actuator element. In this case, the stroke performed by the actuator element and/or the work applied by the actuator element until a particular signal of the transformer unit is achieved is evaluated.

In a further advantageous embodiment, a positioning element is provided at the first and/or the second measuring arm for positioning a calibration mass or a calibration length element. Corresponding measuring elements are frequently calibrated by exerting an effect with a gauged weight or according to a calibrated length, for example by the weight being added to the corresponding measuring arm and/or by a defined length deflection being caused and by the resulting deflection being ascertained. By providing the positioning element, the position of the calibration weight to be attached is fixed precisely, as a result of which the calibration can be performed in a reproducible manner and values arising from the calibration must be allocated in mechanical and electrical characteristics of the measuring element, without being influenced by a maladjustment of the point of action of the calibration mass or of the calibration length element. In one variant, the positioning element is a groove formed in the respective measuring arm or a corresponding notch, which can suitably surround and thus position a string or other line used to suspend the calibration mass. In other variants, there can be provided an appropriate embossment or another bulge of a positioning element which engages in a complementary component of the calibration mass in order to achieve a reliable positioning.

According to the invention, the aforementioned problem is solved by a measuring element for measuring forces which has a first measuring arm which extends in a longitudinal direction of the measuring element and a second measuring arm which extends in a longitudinal direction, wherein the first and the second measuring arms can be deflected relative to one another in a direction perpendicular to the longitudinal direction. The measuring element according to this aspect further comprises a deformation section which connects the first measuring arm and the second measuring arm to one another in an elastically deformable manner. Furthermore, the first measuring element has a first measurement range which is fixed in that when a force which is to be measured through relative deflection of the first and the second measuring arm and which is equal to a threshold or smaller than the threshold exerts an effect, the first measuring arm and the second measuring arm remain spaced apart from one another. Furthermore, the measuring element has a second measurement range which is fixed in that when a force which is to be measured through relative deflection of the first and of the second measuring arm and which is greater than the first threshold exerts an effect, a front region of the first measuring arm is in contact with a front region of the second measuring arm.

In the measuring element according to this aspect of the present invention, an assessment of the force to be measured takes place on the basis of the deformation of the deformation section, wherein overall a broadened measurement range and/or a greater exactness can be achieved by at least the two measurement ranges being provided which differ from one another by contact and non-contact of the front regions of the measuring arms. In other words, the measuring element is formed such that for a force up to a certain threshold force, when exerting an effect onto the measuring element, a mechanical contact between the first and second measuring arm is avoided, so that in this case a favourable response behaviour can be achieved for relatively small forces, for example in the range of a few tens of Newtons up to a few hundreds of Newtons, because substantially only the elastic spring force of the deformation section occurs as a counter force for the force to be measured. When the first threshold is exceeded, a mechanical contact of the two measuring arms takes place so that the mechanical characteristics of the measuring arms themselves also play an increasingly important role as a counterforce for the force to be measured. In other words, even if the deformation in the deformation section suffers no such pronounced change, as is the case prior to the onset of the contacts between the two measuring arms, a more extensive evaluation of the force to be measured can take place via the additional information, i.e., the information that the two measuring arms are in contact. In other words, for a measuring element with relatively general shaping of the deformation section and with transformer units provided thereon or with transformer units in connection therewith, a relatively large range of forces to be measured can be achieved compared to conventional "indirectly" measuring systems. Further advantages and characteristics of the provision of at least two measurement ranges based on two different mechanical states of the measuring arms are also explained in the preceding embodiments.

In a further advantageous embodiment, there is provided a third measurement range which is fixed in that when a force which is to be measured through relative deflection of the first and second measuring arms and which is greater than the first threshold and equal to or greater than a second threshold that is above the first threshold exerts an effect, the front region of the first measuring arm is in contact with the front region of the second measuring arm and a size of an intermediate space formed by a rear region of the first measuring arm and a rear region of the second measuring arm is characteristic of the force which is to be measured. As has already been explained previously, an even further area of application for the measuring element according to the invention arises through the provision of a further measurement range.

In further advantageous embodiments, a first detecting device is provided for registering the contact of the measuring arms, where necessary in connection with a second detecting device which registers the size of the intermediate space. As already explained in conjunction with preceding embodiments in the first aspect, suitable signals, for instance electrical signals, can be obtained by the respective detecting devices, in order to evaluate the information obtained through the respective mechanical state of the measuring arms.

In advantageous embodiments of the measuring element of the second aspect, one or more transformer units that respond to deformation are provided on the deformation section. In other words, in these variants, the deformation section is designed geometrically such that at least one, preferably several, transformer units can be accommodated thereon, so that an efficient and precise ascertainment of the deformation of the deformation sections can take place. For example, if a strain gauge is used, this may be arranged such that it is applied in the full length on the deformation section so that a high response property is achieved in connection with good resolution of the deformation which is to be registered. In one variant, one of the one or more transformer units is arranged on a side of the deformation section facing the measuring arms. Accordingly, the deformation section is formed at least such that it is possible to arrange the transformer unit on the facing side, as a result of which a position is available which is not possible, for example, in the aforementioned conventional, indirect measuring arrangement. In further variants, in addition or alternative to the attachment of a transformer unit on that side of the deformation section which faces the measuring arms, one or more transformer units can also be arranged on the side facing away from the measuring arms, in order in turn to thus increase response properties and/or exactness and/or resolution.

A geometric design of the deformation section is preferably modelled on a geometric design ascertained by simulation, as has also already been explained in connection with the first aspect. In this manner, with the given material characteristics of the deformation section, a substantial aspect of the measuring element can be fixed such that an adaptation to the intended application is possible with a high degree of exactness, with a large span of forces to be measured being able to be covered due to the implementation of at least two different measurement ranges.

As has already been explained previously, a position of the transformer unit is fixed on a region with the locally highest deformation, which region is ascertained by experimentation and/or simulation.

In further advantageous embodiments, appropriate measures are taken, which are also explained in connection with the first aspect. For example, those surfaces of the measuring arms which face one another are suitably formed, as also explained previously, and/or the total thickness of the first and second measuring arms varies or is adjustable, as has also been described previously. In further variants, the thickness can vary in the range of +/-200 µm and/or separate regions can be provided which each have a thickness which is uniform but which can be different from region to region and/or an actuator element can be provided at a suitable point in the measuring element, in order to adjust the mechanical characteristics, for example the total thickness, for instance in the range of 0.2 mm to 2.0 mm as desired. Furthermore, suitable means can be provided in order to guarantee an exact position of the point of action of a calibration mass or of a calibration length element.

In a further aspect of the present invention, the aforementioned aim is achieved by a measuring element for registering forces, which has a first measuring arm, which extends in a longitudinal direction (L) of the measuring element, with a front region and a rear region. Furthermore, a second measuring arm, which extends in the longitudinal direction, is provided with a front region and a rear region, wherein the rear regions of the first and of the second measuring arm can be deflected relative to one another in a direction perpendicular to the longitudinal direction and the front regions are firmly connected to one another. The measuring element further comprises a detecting device for registering a size of an intermediate space which is formed by the rear regions of the first and second measuring arms.

Through this configuration of the measuring arms which is "closed" at the force effect side, there arises a robust structure in which a response sensitivity is achieved in the rear, open region, while an influence of forces which exert an effect on the frontmost region of the measuring arms is very small. This is advantageous for very large forces, because the arrangement is more rigid. A small total thickness can also be realised due to the more robust structure.

In one variant, the detecting device comprises one or more transformer units which respond to deformation of the rear region of the first and/or of the second measuring arm. In other words, the detecting device has, additionally or as the sole detecting means, the components which respond to deformation, for instance thin metal film strain gauges and/or a silicon strain gauge and/or a polymer strain gauge and/or a piezo-electrical device, etc. and/or an optical transformer unit and/or high-frequency electromagnetic transformer unit and/or an acoustic transformer unit, which enable high precision.

In a further embodiment, the detecting device comprises a device which registers the spacing between the rear region of the first measuring arm and the rear region of the second measuring arm, as a result of which, alternatively or in addition to the aforementioned transformer units, further measuring concepts, for instance capacitive and/or inductive space measuring, ultrasound measuring, optical space measuring, electromagnetic space measuring and the like, can be used. In this manner, response sensitivity and exactness can be further increased.

In a further variant, the first and the second measuring arm are elastically coupled with one another on a side facing away from the front regions. Through this additional mechanical coupling, there arises on the one hand an overall higher stability of the measuring element, in particular of the two measuring arms, but with the capability of registering a change of the intermediate space nevertheless being preserved. In a further embodiment, the elastic coupling is carried out by a deformation section which is provided with one or more transformer units which register a deformation of the deformation section. In this case, the transformer units can be part of the detecting device or can be provided in addition thereto.

According to a further aspect of the present invention, the aforementioned problem is solved by a measuring system for detecting forces. The measuring system comprises a measuring element, as described in one of the preceding embodiments or as explained in the following detailed description. Furthermore, the measuring system has a calibration unit which can be coupled with the measuring element and which, in the coupled state, fixes a position at the first and/or the second measuring arm for loading with a calibration force or for applying a calibration length element. In other words, in this aspect of the present invention, the advantageous effects of the previously explained measuring element can be further strengthened by an extremely reliable calibration being made possible by the calibration unit. In one variant, the calibration unit is provided in the form of a receptacle which receives a part of the two measuring arms in a precise manner and thereby exposes a precisely fixed region of the first measuring arm and/or of the second measuring arm on which the desired calibration force can then act. For example, the receptacle can have the form of a cap or a cup that, through its geometry, enforces a precise position of the two measuring arms inside the cap or cup when the first and the second measuring arm are introduced. With one or more correspondingly positioned apertures in the calibration unit, it is then possible to exert a desired calibration force onto the first and/or the second measuring arm. In this case, the calibration force can be exerted for example by a weight belonging to the calibration unit, or a separate weight. For example, the one or more apertures in the calibration unit can serve as a guide for a pressure rod which itself serves as a calibration mass or which, in connection with an additional mass, functions as a calibration mass in order to thus exert the desired calibration force at the precisely fixed position.

According to a further aspect of the present invention, the aforementioned problem is solved by a method of providing a measuring element, wherein the measuring element has the characteristics of one or more of the previously demonstrated embodiments. The method comprises the selection of a material at least for the production of the deformation section of the measuring element and the fixing at least of a measurement range for forces to be measured through relative deflection of the first and of the second measuring arms. Furthermore, one or more materials and one or more modes of operation are selected for one or more transformer units which respond to deformation. The method further comprises ascertaining a simulated geometric design of the deformation section by taking material characteristics of the selected material and of the fixed measurement range as the basis by carrying out a simulation calculation. Finally, the method comprises the production of the deformation section from the selected material by modelling the simulated geometric design.

In this aspect according to the invention, a material for the deformation section and one or more transformer units are firstly selected and one or more possible geometries are ascertained with regard to a desired measurement range, i.e. with regard to the range of the size of the forces to be measured, wherein this advantageously takes place such that a high degree of exactness and/or good response properties and/or a high resolution arise for the selected measurement range. On the basis of the geometric design ascertained by simulation, the actual geometric design of the deformation section is produced, as a result of which a high degree of conformity of the simulated characteristics with the characteristics which are actually to be expected is achieved. In an advantageous variant, the simulation also takes place from the aspect of ascertaining one or more favourable positions for one or more transformer units which are to be arranged on the deformation section. Here, the term of the position of a transformer unit should be understood such that the size and form of the region and thus of the transformer unit are thus also defined. In other words, for a given geometric design of the deformation section, it can be advantageous to provide several smaller regions for correspondingly several smaller transformer units, in order to thus obtain overall information with higher spatial resolution and possibly higher statistical significance or generally greater exactness for the evaluation of the deformation of the deformation section. For example, through simulation it is possible to efficiently ascertain whether it is advantageous to attach one or more transformer units on the side facing the measuring arms or on the side facing away from the measuring arms of the deformation section, or to provide both sides for the attachment of one or more transformer units. The simulation calculation can be performed in one advantageous embodiment on the basis of the finite elements method. It is well-known that the finite elements method is particularly advantageous for performing a simulation with a computer, because the development of this method is always carried out in interaction with computer-aided tools and thus enables an efficient implementation on any desired suitable computer platform.

Further advantageous embodiments are also defined in the dependent claims and emerge from the following detailed description when this is studied with reference to the accompanying drawings in which:
- Fig. 1a: is a schematic side view of a measuring system according to one embodiment,
- Fig. 1b to Fig. 1d: are schematic side views of a deformation section with different geometries and different positions and number of transformer units for deformation-dependent signal output,
- Fig. 2a: is a schematic side view of a measuring system according to one further embodiment, in which different mechanical states are used to implement different measurement ranges,
- Fig. 2b to Fig. 2d: show three different mechanical states of the measuring element,
- Fig. 3a to Fig. 3e: show schematic perspective views of cross-sections and thus of surfaces, which face one another, of the measuring arms according to various embodiments,
- Fig. 4a: shows a schematic side view of a measuring system having varying or variable total thickness of the measuring arms,
- Fig. 4b: depicts an embodiment in which the thickness of one or both measuring arms is adjusted differently in different regions,
- Fig. 4c: schematically shows an embodiment in which an extent/contraction of a part of the measuring element can be altered in a controllable manner,
- Fig. 5: shows a schematic side view of a part of the two measuring arms, wherein a section that is not sensitive to force is provided,
- Fig. 6: schematically shows a perspective view of a variant in which several pairs of measuring arms are provided in order to measure simultaneously several forces independently of one another,
- Fig. 7: schematically shows a side view of a part of the measuring element with adapted cross-sections,
- Fig. 8a: shows a schematic side view of a measuring system from a further embodiment, wherein a separate calibration unit is provided,
- Fig. 8b: shows a variant in which, alternatively or in addition to the calibration unit, a positioning element is provided for exactly fixing a calibration force, and
- Fig. 8c: schematically shows a side view of a part of the measuring system from Fig. 8a, wherein a part of the measuring arms is positioned in the calibration unit and is loaded with a measuring force with high local resolution.

Additional embodiments of the present invention will now be described in greater detail with reference to the accompanying drawings.

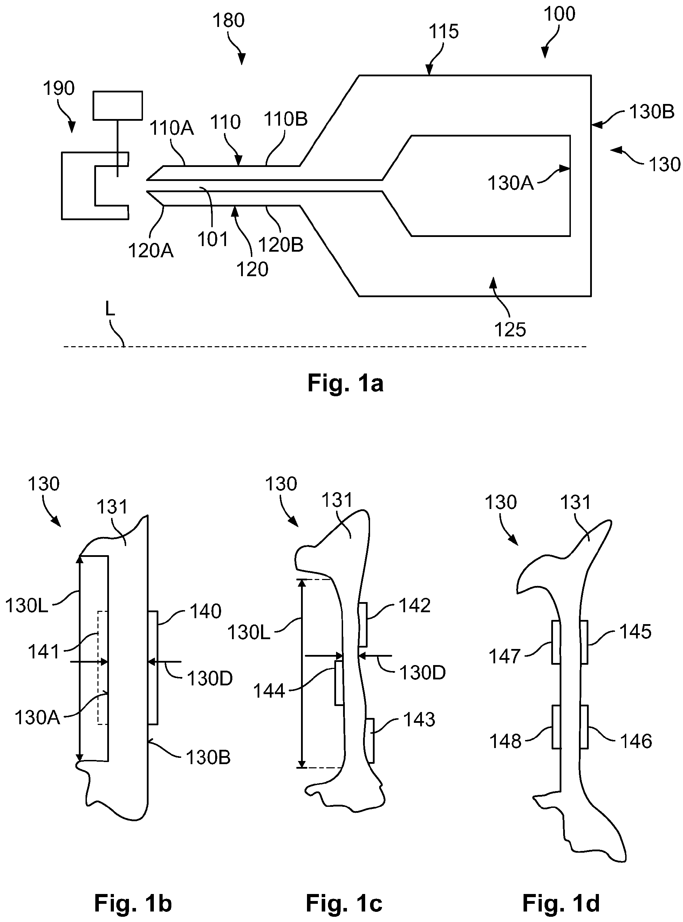

Fig. 1a shows a schematic side view of a measuring system 180 which is formed for measuring forces, in particular forces in the region of a few centinewtons up to some hundreds of Newtons, wherein in this case the component of a respective force, which is oriented perpendicular to a longitudinal direction L of the system 180 and which is situated in the plane of projection of Fig. 1a, are registered. In other words, in practice such forces can possibly act onto the system 180 at a certain angle, with that corresponding component of this force which is situated in the plane of projection of Fig. 1a and oriented perpendicular to longitudinal direction L is measured. However, a small angular deviation regarding the previously ascertained force direction can occur due to a slight deflection or deformation in the measuring system 180.

The system 180 comprises a calibration unit 190 which serves to exert a given known force at the system 180 at a precisely specified position, as is also explained in greater detail below. The system 180 further comprises a measuring element 100 which is the component of the system 180 which is loaded with a force which is to be measured and provides a signal corresponding to this force. The measuring element 100 comprises a first measuring arm 110 and a second measuring arm 120, which in the unstressed state form therebetween a spacing 101 which, depending on the application, can have a size from some tenths of a millimeter up to a millimeter or more. The first measuring arm 110, which has a front region 110A and a rear region 110B, and the second measuring arm 120, which similarly has a front region 120A and a rear region 120B, are mechanically coupled to one another via a deformation section 130, so that a relative deflection of the measuring arms 110, 120 relative to one another, which leads to a change in the spacing 101, causes an elastic deformation of the section 130, this deformation being transformed into a signal via suitable means. For the sake of simplicity, such means for transforming the deformation into a signal are not shown in Fig. 1a. In addition, in the depicted embodiment the measuring arms 110, 120 are connected by means of corresponding legs or transition regions 115, 125 to the deformation section 130. The transition regions 115, 125 are typically configured such that they show a merely negligible deformation when they are loaded with a force which has the previously described orientation. In other words, the geometric arrangement made up of the measuring arms 110, 120, the transition regions 115, 125 and the deformation section 130 is structured such that, when a relative deflection of the measuring arms 110, 120 takes place, a noticeable deformation occurs only in the deformation section 130 and, as described below, to a certain extent at the measuring arms 110, 120 too. It should be noted that, when the measuring arms 110, 120 are in the "unstressed" state, small forces can nevertheless exert an effect on the measuring arms 110, 120, but these cause substantially no noticeable deformation, in particular in section 130. For example, in the depicted orientation, gravity can act downwards perpendicularly to the longitudinal direction L and this force leads to no measurable deformation, even if only a part of the measuring element 100 is rigidly connected to an additional body, for instance a housing (not shown).

As emerges from Fig. 1a, the deformation section 130 has in particular a pronounced length in the direction perpendicular to longitudinal direction L, so that, depending on the material and geometry, the deformation section 130 can register a desired response sensitivity even in the case of small deflection of the measuring arms 110, 120. For this purpose, one or more transformer units which are formed to transform a deformation of the section 130 into a signal are attached at given positions, for instance on a side 130A facing the measuring arms 110, 120 and/or on a side 130B facing away from the measuring arms 110, 120. It should furthermore be noted that, alongside the material characteristics, a "height" or material wall strength, i.e. the dimensions of the material in a direction perpendicular to the plane of projection from Fig. 1a, in particular of the deformation section 130 also has a significant influence on the deformation characteristics of the section 130 and therefore is also taken into account when selecting the geometric design of the deformation section 130.

Fig. 1b shows a schematic side view of the deformation section 130, the geometric design of which is adapted to the respective application such that a desired degree of response sensitivity, exactness and resolution is achieved for the deformation brought about by a deflection of the measuring arms. In the embodiment shown, the deformation section 130 substantially corresponds to a more or less rectangular section with relatively sharp edges 131, i.e. with a corresponding transition to the connection regions 115, 125 (Fig. 1a), so that a correspondingly exactly defined length 130L can be specified which corresponds to the spacing of the sharp edges 131. Depending on the application and other material characteristics and the wall thickness of the section 130, the length 130L can be in the region of 5 mm to 20 mm or greater. The length 130L is in this case selected here such that at least one transformer unit can be fully arranged thereon.

The geometric design of the deformation section 130 is ascertained starting from the material characteristics, i.e. modulus of elasticity, wall thickness, and the like, on the basis of a simulation calculation, in which a fictive deformation section is constructed on the basis of a suitably selected number of finite elements and the mechanical behaviour in the event of bending forces occurring is ascertained. The bending forces entering into the calculation can be ascertained in this case on the basis of the geometric design of the measuring element 100, for example if it is assumed that at a given length along the longitudinal direction L (Fig. 1a) a certain range of forces acts onto the measuring arms and are ultimately transmitted via the transition regions onto the deformation section 130. In this manner, significant dimensions, for instance the length 130L or a width 130D of the section 130 can be ascertained in the case of given material wall strength and the known material characteristics. In other words, in contrast to conventional measuring systems, the geometric design of the deformation section 130 is here firstly ascertained by calculation depending on the other factors and in particular the material characteristics for a given wall thickness, such that a desired mode of operation of the measuring systems is guaranteed over a given range of forces exerting an effect. Furthermore, when performing such simulation calculations, it is also possible for corresponding regions with the locally highest deformation to be ascertained in the event of given force acting onto the measuring arms and to be ascertained as suitable positions, i.e. location and expansiveness for corresponding measuring transformers. In this manner, when producing the measuring element 100, it is possible to perform optimised adaptation to the desired application and in particular to the range of forces which occurs, which means that compared to conventional systems, the response sensitivity and/or the resolution and/or the exactness and thus also the reproducibility are improved, as has been mentioned previously. In this manner, it is for example possible to carry out, with the measuring system 180 on the basis of an appropriately configured deformation section 130, a measuring system analysis in which exactness, correctness, systematic measurement deviation, repeatability, reproducibility and the like can be examined and evaluated systematically. In this manner, it is also possible to obtain, in a correspondingly systematic manner, statements on measurement objects which are measured by means of the measuring system 180 (Fig. 1a).

On the basis of the corresponding simulation calculations, for example the position, i.e. the situation, for instance the situation of a mid point, and the dimensions of a transformer unit 140, are determined in order to thus obtain a desired degree of resolution, exactness, response sensitivity, and the like. For example, in the embodiment shown, the transformer unit 140 is provided fully at the central location within the extent 130L of the deformation section 130, because the greatest values of the deformation have been calculated there. In other words, the transformer unit 140 is arranged fully within the deformation section 130, on its facing-away side 130B. Alternatively or additionally, a further transformer unit 141 with suitable dimensions can be arranged on the facing side 130A, wherein here too the exact situation and dimensions of the transformer unit 141 are given by the simulation calculation.

Fig. 1c shows a further variant in which the geometric design differs from the design in Fig. 1b, for instance in terms of the length 130L and/or the representative width 130D which is, for instance, measured in the middle of the length 130L. As has already been explained previously, the material wall thickness of the section 130 is taken into account in this case, with it being assumed here, for the sake of simplicity, that the material thickness is identical for the respective different geometric designs. The geometric design of the section 130, in which the form of the edges 131 can be different compared to the relatively sharp edges 131 in Fig. 1b, is here too again firstly determined through simulation, with suitable positions for several transformer units also having been ascertained. In the depicted embodiment, transformer units 142 and 143, for example, are arranged on the facing-away side fully within the region of the length 130L of the section 130 and are thereby situated on outer regions, whereas a further transformer unit 144 is provided in a central region on the facing side of the section 130. It should be noted, that when calculating the deformation behaviours of the section 130 it is in particular also possible to take into account the mechanical behaviour of the one or more transformer units which are thus also encompassed in the "material characteristics" and the "material thickness or wall thickness" of the deformation section.

In clear embodiments, at least one transformer unit is fixed in its position, including its dimensions, such that it covers a region of maximum deformation, while other transformer units are arranged such that they are provided at least in the region of a local maximum of the deformation. Such an approach can, for example, be advantageous for increasing the response sensitivity and also the exactness. For example, the transformer unit 144 can be situated at a location of a globally maximum deformation, while the transformer units 142 and 143 can be arranged at positions with locally maximum deformation. In other clear embodiments, the transformer units can be appropriately arranged without taking into account the global or local maximum of deformation such that, in interaction, an optimised signal is obtained for the elicited deformation in the section 130.

Fig. 1d shows a further variant with adapted geometric design of the section 130, wherein transformer units 145, 147 are provided at opposite positions in the proximity of an edge region of the section 130 and similarly transformer units 146, 148 are provided at opposite positions at the opposite edge region of the region 130. It is the case here too that the precise geometric design of the section 130, i.e. its length, its width, the form of the edges, and the like, with given material characteristics and material thickness, including the characteristics of the transformer units for instance, are ascertained through simulation and the corresponding positions of the transformer units 145, ..., 148 can also be suitably obtained through simulation.

It should be noted that on the basis of the computed geometric design and the computed positions of the one or more transformer units, which are preferably situated fully within the deformation sections, are then modelled when producing the actual measuring elements, wherein, through the available manufacturing techniques, only small deviations occur between the theoretically ascertained geometric design and the actually implemented geometric design. In other words, typical deviations from the theoretical target value to the practical modelled actual value of the dimensions are, for example, in the region of 1 µm to a few micrometers.

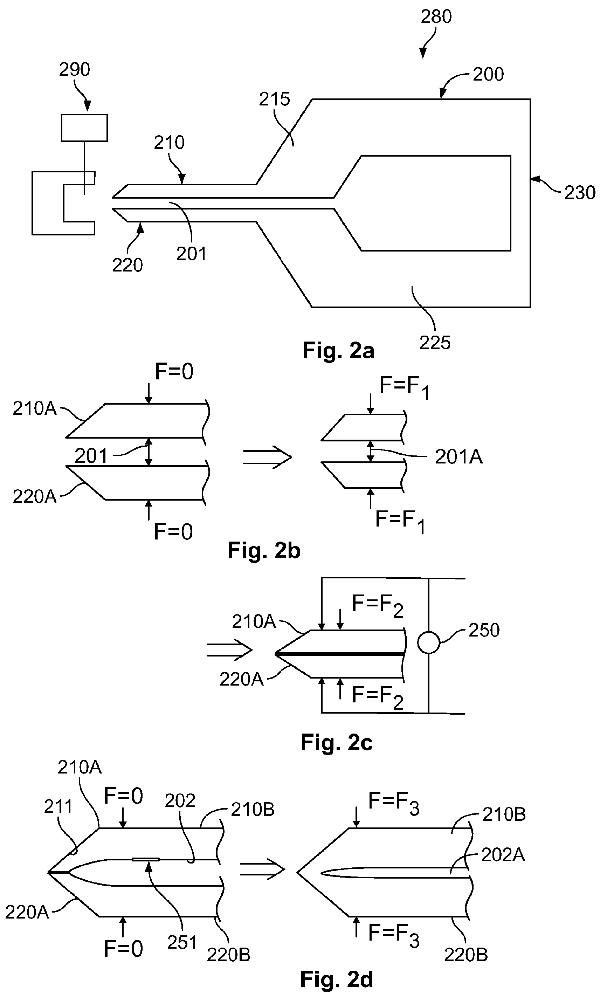

Fig. 2a shows a schematic side view of a measuring system 280 according to a further embodiment. As shown, the system 280 has a measuring element 200 and a calibration unit 290. The measuring element 200 comprises a first measuring arm 210 and a second measuring arm 220, which, in the unstressed state, are separated from one another by a spacing 201. Furthermore, the first measuring arm 210 and the second measuring arm 220 are coupled to a deformation section 230 via corresponding connection regions 215, 225, with one or more measuring transformers, which for the sake of simplicity are not shown in Fig. 2a, being attached to the deformation section 230. In clear embodiments, the corresponding measuring transformer units can be arranged as shown and described in connection with the system 180 in Figs. 1b to 1d. It should however be noted that a corresponding positioning of one or more measuring transformer units can take place on the basis of simulation calculations as is described previously for example, in other embodiments only a suitable geometry, which can be ascertained by experiments or the like or also by simulation, is sufficient and can be applied as a basis for the measuring element 200. In other words, in advantageous embodiments, the geometric design of the deformation section 230 in particular is ascertained on the basis of simulation calculations, but in other embodiments this is not required and corresponding experimental results and other expert knowledge may be sufficient to configure the measuring element 200 for a desired area of application. The measuring element 200 is in particular designed for a broadened measurement range by being able to assume different mechanical states which correspond to different measurement ranges for the forces to be measured.

Fig. 2b shows a schematic side view of a part of the measuring element 200, wherein a front region 210A of the first measuring arm and a front region 220A of the second measuring arm are shown in the unstressed state, meaning that the spacing 201 is maintained there. When loaded with a force, the value 0 is however smaller than a first threshold, for example a force of several tens of Newtons, a relative deflection of the two measuring arms takes place, i.e. in particular the two front regions 210A, 220A, so that a new spacing 201A is adjusted which is representative of the exerted force F₁. It should be noted that the relative deflection can possibly take place without appreciable elastic deformation of the two measuring arms if they possess sufficient rigidity for the force F₁ which is exerting an effect. If the force F₁ increases, a further reduction of the spacing 201A takes place and the region in which the spacing 201A is not 0, i.e. as long as there is no direct mechanical contact between the two front regions 210A, 220A, is referred to as a first measurement range.

Fig. 2c shows a further mechanical state of the measuring element 200, in which a force or pair of forces F₂ exerts an effect on the two measuring arms so that they come into direct contact with one another. In this case, the force F₂ at which a mechanical contact just occurs between the two front regions is referred to as a threshold. In other words, from the time of a direct contact between the two front regions of the measuring arms, it is possible that no additional, or a significantly reduced, deflection will occur at the deformation section 230, and possibly only a certain elastic deformation of the measuring arms will take place, so that the contact surface between the first front region 210A and the second front region 220A grows larger. The mechanical contact between the regions 210A, 220A can be suitably detected, for which purpose a suitable detecting unit 250 is provided.

The schematically depicted detecting unit 250 can be suitably formed here to register an electrical resistance between the front regions 210A, 220A, which resistance changes for example when the measuring arms overall are constructed from a material with relatively high electrical resistance. In other words, in this case, in the event of there being no contact, an infinite resistance would be measured at an insulator or a relatively large resistance would be measured if the flow of current is taking place via the measuring arms, the transition regions and the deformation section (see Fig. 2a). On the other hand, if there is a direct contact, the resistance is decreased correspondingly through the parallel connection of the "contact resistance", such that this permits a corresponding registering of the direct contact. Furthermore, the increase in the contact surface can contribute to a further measurable reduction of the resistance, meaning that a corresponding representative signal is obtained for the force F₂.

In other design variants, the detecting device 250 can additionally or alternatively implement other measuring concepts, for instance a capacitive measurement, an inductive measurement, and the like, in order to obtain a corresponding output signal. Furthermore, as an alternative or in addition to the electrical evaluation of the direct contact, one or more pressure-sensitive sensors may be provided, which then output a signal which is dependent upon the force F₂. It must be noted here that an appropriate mechanical stressing of such sensors is relatively low, because a stressing only occurs in a direction perpendicular to the longitudinal direction and also only when the corresponding threshold force which limits the first measurement range is exceeded.

Fig. 2d shows a further embodiment in which a further mechanical state is depicted in which a further rise in the force acting on the measuring arms does not lead to any further increase in the contact surface 211 between the front regions 210A and 220A, which means that, starting from a particular second threshold force, the size of an intermediate space 202 formed substantially by a rear region 210B of the first measuring arm and a rear region 220B of the second measuring arm is changed. When a force which is above the second threshold, here referred to as F₃, exerts an effect, then a deformation or reduction of the intermediate space takes place so that a reduced size 202A, for example, arises. In order to register the size or form and their change from the intermediate space 202 into the intermediate space 202A, there is provided a suitable further detecting device 251 which outputs a signal that is a measure of the size of the intermediate space 202, 202A for example. The detecting device 251 can in this case have any suitable sensors, for instance strain gauges, piezo-electrical elements, electrical components for the inductive and/or capacitive measurement and the like, which means that a further measurement range for larger forces can be provided. It is the case here too that the deformation section 230 (Fig. 2a) possibly suffers no further appreciable deformation and thus cannot significantly contribute to the characterisation of the occurring forces, but the information obtained by the detecting units 250 and/or 251 enable a further-reaching evaluation of the occurring forces. In this manner, a single structure enables a very large range of forces to be covered, wherein, due to the characteristics of the deformation section 230, a large degree of response sensitivity and resolution is achievable, in particular in the first measurement range characterised by the mechanical state from Fig. 2b.

In a further design variant, the measuring element 200 depicted in Fig. 2d is a measuring element in which the measuring arms 210, 220 are firmly connected to one another mechanically at their front regions 210A, 210B, which means that a force exerting an effect directly onto the regions which are firmly connected to one another causes no appreciable deformation or change to the intermediate space 202. On the other hand, the rear regions 210B, 220B react to the force to be measured, as is also already the case in the previous embodiments depicted in connection with Fig. 2d. The detecting device 251 thus registers the size of the intermediate space 202, for instance by registering the deformation of the rear regions 210B, 220B and/or by registering the spacing of a specified region of the rear region 210B, 220B, for which purpose there are a number of suitable measuring concepts available, which have already been listed previously.

In other words, in these embodiments, the inseparable front regions 210A, 220A give rise to a great rigidity which makes it possible to accommodate very large forces. The robust mechanical structure additionally allows a very small total thickness for a given force which is to be measured.

In some embodiments, for the purpose of mechanical stabilisation, the measuring arms are suitably mechanically coupled on the side (not shown) facing away from the front regions 210A, 220A, for instance pressed together, as schematically shown on the left side, or connected to one another by adhesive bonding, as is shown schematically on the right side of Fig. 2g, such that forces exerting an effect there have no significant effect on the size of the intermediate space 202. In other embodiments, the measuring arms 210, 220 are coupled to one another by an elastic deformation section, for instance in the form of the deformation section 230, which is formed such that a certain deformation of the section 230 is caused if the intermediate space is changed. A suitable geometric design for this can be ascertained by experimentation and in particular by simulation. Transformer units can also be provided for such a suitably designed deformation section, these transformer units being able to be used in addition or alternative to the detecting device 251, in order to ascertain the force which is to be measured.

It should be noted that, as has been mentioned previously, the concept, implemented in the measuring system 280, of the two or more different mechanical states for implementing two or more measurement ranges can in the same way also be implemented in the measuring system 180, i.e. in the measuring element 100, in addition to the concepts described there. Furthermore, the previously described embodiment with firmly or rigidly connected front regions 210A, 220A can likewise be combined with features described previously or below.

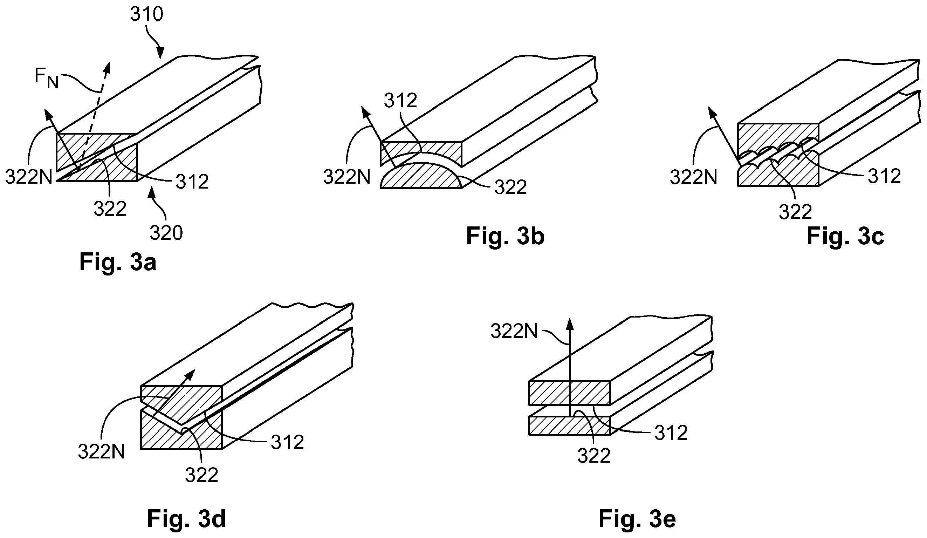

Figs. 3a to 3e show schematic perspective views of front regions of measuring arms which can be used in the previously described measuring elements 100, 200, for example, and also in measuring elements described below.

Fig. 3a shows a view of a cross-section in a perspective depiction of a first measuring arm 310 and of a second measuring arm 320, wherein surfaces 312 and 322 which are correspondingly facing one another are designed such that they are complementary to one another, i.e. such that they have a certain form fit when they lie on one another, and such that at least regions of the surface have a surface normal 322N, which make an angle with a force component F_{N} which is to be measured. In the variant shown in Fig. 3a, the surfaces 312 and 322 have substantially smooth faces that correspondingly form an angle of more than 10 degrees and even more advantageously of 30 degrees or more, to the direction of the force component F_{N} which is to be measured.

Fig. 3b shows a further variant, in which the surfaces 312 and 322 are formed as complementary curved faces, so that here too the surface normal 322N forms, in the significant regions of the curve form, a more or less large angle to the force component which is to be measured.

Fig. 3c shows a further variant, in which the facing and complementary surfaces 312, 322 have several curved sections, which means that, in this case too, there are many face regions with a surface normal 322N, which form an angle to the force which is to be measured.

Fig. 3d shows a further variant, in which the surfaces 321, 322 are formed as wedge shapes, so that here too the surface normals 322N form an angle to the direction of the force component which is to be measured.

The facing surfaces 312, 322, which are formed complementary to one another and have the characteristic of forming, at least in regions, an angle between the respective surface normal and the direction of the force component, lead to an overall more rigid behaviour of the first and of the second measuring arm, as a result of which a more robust mechanical behaviour can be achieved.

Fig. 3e shows a further variant, in which the surfaces are oriented in the direction of the deflection, such that the normal 322N points in the direction of the force which is to be measured.

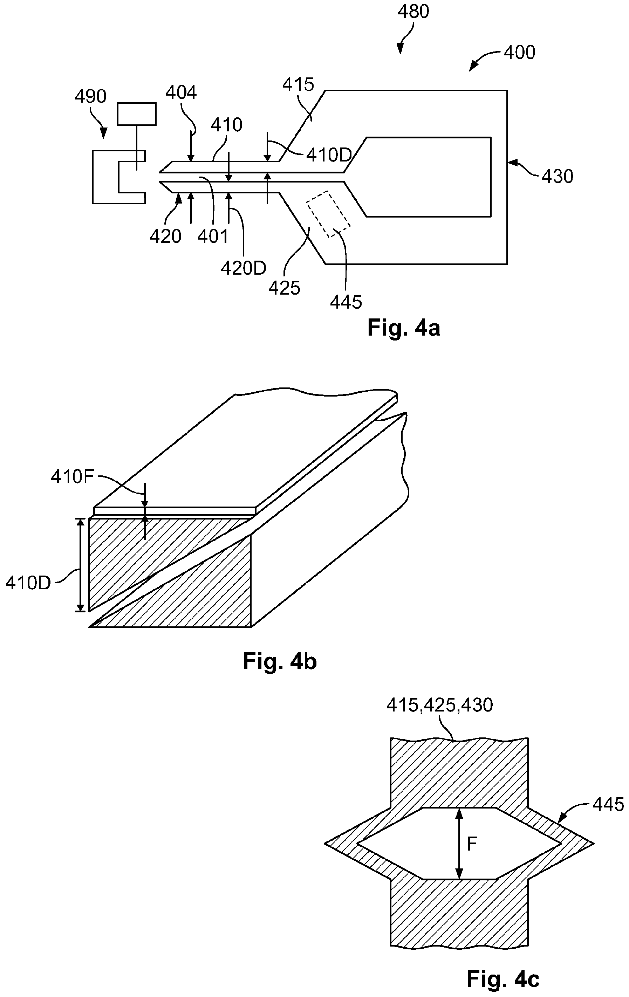

Fig. 4a schematically shows a side view of a further measuring system 480 with a calibration unit 490 and a measuring element 400 in which a total thickness of a first measuring arm 410 and of a second measuring arm 420 is varied, or can be varied, at least in regions. It must be noted that the characteristics of a varied or variable total thickness of a part of or of the entire measuring arms 410, 420 of the measuring element 400 can also be installed in each of the previously described measuring elements 100, 200 or also in measuring elements described below in addition to the otherwise described characteristics. In other embodiments, none or only isolated characteristics of the measuring elements 100, 200 are implemented in the measuring element 400. In the unstressed state, the first measuring arm 410 and the second measuring arm 420 have a spacing 401 which can be located in a suitable range. The spacing 401 in conjunction with the relevant "thickness" 410D of the first measuring arm and the "thickness" 420D of the second measuring arm gives rise to a total thickness 404 in the unstressed state. The thicknesses 410D, 420D therefore correspond to dimensions of the measuring arms in a direction which also corresponds to the direction of the force component to be measured and which is oriented perpendicularly to the longitudinal direction L (Fig. 1a).

The first measuring arm 410 and the second measuring arm 420, as also already described in the preceding measuring elements, are connected by corresponding transition regions 415, 425 to a deformation section 430, which, in the event of relative deflection of the measuring arms, displays a deformation that is transformed into a signal by one or more appropriately arranged transformer units. In particular, it must be noted that the appropriate transformer unit can be attached, at any position, to the deformation section 430 as; for example, strain gauges, piezo-electrical components, and the like. In other advantageous embodiments, the positioning of the one or more transformer units can, as explained previously, take place as explained in connection with the measuring element 100, for example.

It should also be noted that the cross-sections of the measuring arms can be designed as described in connection with Figs. 3a to 3d. In this case, the corresponding thicknesses 410D, 420D are possibly variable and a corresponding representative value at a given position is assumed as a measuring point for the corresponding thickness 410D, 420D. However, it should be noted that the design of the measuring arm surfaces which face one another is of no significance to the total thickness 404. In the depicted embodiment, in the unstressed state, there are provided regions with a variable total thickness 404, which means that different measurement results can possibly be ascertained depending on the angle of attack of the force which is to be measured along the longitudinal direction of the measuring arms, because the total thickness also influences the mechanical interaction between the attacking force and the measuring arms.

Fig. 4b shows for example a section in which the total thickness 404 (Fig. 4a) is increased by providing an additional thickness 410F. For example, one or more material layers, for example material foils, are applied onto the specified section of the first measuring arm. In other words, in the depicted section the original or minimum thickness 410D is correspondingly increased by the thickness 410F. A further thickness which is greater than the original thickness 410D but smaller than the thickness 410F can accordingly be installed in another section (not shown) by applying a thinner material layer or a smaller number of identical material layers. In this manner, a section with minimum thickness corresponding to the thickness 410D, a section with a "nominal" thickness and a section with a maximum thickness, i.e. 410D plus 410F, could be installed in order to implement three different total thicknesses 404. It should be noted that a corresponding varying of the thickness can additionally or alternatively be carried out at the second measuring arm and that two regions or four or more regions of different thickness can be installed along the longitudinal extent of the measuring arms. If this is deemed to be suitable, it is also possible for more or less gradually varying thickness to be installed in one or both measuring arms by appropriately adding additional material.

Fig. 4c schematically shows a side view in which one or more control members 445, i.e. actuator elements, are provided, in order to controllably achieve an elongation/contraction in a certain region of the measuring element 400. For example, the one or more actuator elements 445 can be provided in the transition region 415 and/or the transition region 425 and/or in the deformation section 430, in order thus to controllably adjust the mechanical state of the measuring element 400. As shown in Fig. 4a, for example, a region of the transition region 425 is provided with one or more actuator elements 445, so that a change in the total thickness 404 is achieved when the elongation/contraction of the actuator element 445 is altered. In a similar manner, the one or more actuator elements 445 can be provided in the transition region 415 and/or the deformation section 430 in order to thereby controllably adjust the total thickness 404, for example. The one or more actuator elements 445 are in this case any suitable control elements which perform a corresponding elongation/contraction, for example on the basis of an electrical signal and which must be held in a corresponding state. Among corresponding control members are piezo-electrical elements, controllable elements based on microelectronic mechanical systems (MEMS), micromotors, suitable metals or other materials that possess, for example, a well-reproducible heat expansion, and the like. A control member can also be provided in the form of a spindle driven by a revolving cylinder engine, or also manually. In other words, a desired mechanical state of the one or more actuator elements 445, and thus of the measuring element 400, can thus be adjusted by applying a suitable control signal in the form of an electrical signal, a manual action, a signal that adjusts a reproducible temperature in the actuator element 445, an optical signal, and the like. This can be advantageous in order to alter the total thickness 404 within a desired range, without thereby having to alter the point of action of the force component which is to be measured. A corresponding "adjustment" of the total thickness 404 can also take place dynamically during the measuring process, by the one or more actuator elements 445 being correspondingly triggered when the measuring force exerts its effect. This can lead to a changed deformation in the section 430, because the force component to be measured thus exerts an effect on a system of measuring arms, which in the unstressed state would have a changed total thickness 404. Naturally, the change of the mechanical state of the one or more actuator elements 445 can also take place prior to a direct contact of an object which is to be measured.

Besides the dynamic and static adaptation of the configuration of the measuring element 400 through one or more actuator elements, as has already been described previously, the one or more actuator elements can, in clear embodiments, be used as a sensor, by obtaining the stroke or the deflection and/or applied work of the actuator element as information and involving it for further evaluation. This information can be obtained for instance by determining the number of revolutions of a revolving cylinder engine, by evaluating the control voltage of an element which reacts to voltage, and the like. The triggering of the actuator element and thus the signal which is to be evaluated can for instance be altered until a given signal of the transformer unit(s) is achieved. Through this "compensation" of the signal of the transformer unit, the signal of the actuator element is then an exact measure of the force which is to be measured. This compensation method can also be used to calibrate the measuring element 400 without requiring further calibration components. In other words, the actuator element is activated until the desired calibration value, for instance a desired zero point, is adjusted in the transformer unit. That triggering signal of the actuator element 445 which is required for this calibration value can be applied during the actual measurement or appropriately taken into account during the evaluation.

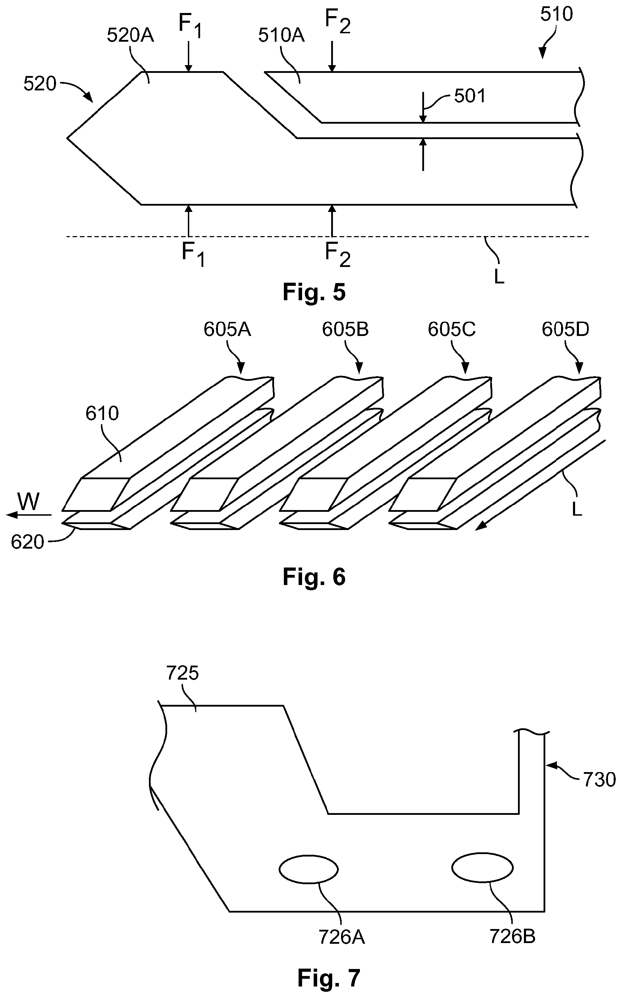

Fig. 5 shows a schematic sectional view of a part of measuring arms 510 and 520, which can be employed in this form in all previously described measuring elements 100, 200, 400 and also in all further described measuring elements. As shown, the first measuring arm 510 and the second measuring arm 520 possess different dimensions in the longitudinal direction L, so that in this variant the second measuring arm 520, for example, has a front region 520A that fully encompasses a front region 510A of the first measuring arm 510 in the longitudinal direction. In other words, the corresponding spacing 501 between the first measuring arm 510 and the second measuring arm 520 in the unstressed state is not formed entirely to the front, but the total thickness in the unstressed state is substantially identical over the entire extent of the measuring arms along the longitudinal direction L. In other words, through the system of measuring arms 510, 520 there arises a region which is insensitive to a force F₁ which is exerting an effect, i.e. to a pair of forces which exerts an effect in the area of the front region 520A, whereas there is a desired sensitivity to a pair of forces F₂ in the area of the first measuring arm 510. Thus in a measurement object, for example a plug connection, it is possible for a position to be set up, in which for instance a force component which is to be measured must be measured in a region which is set back further, while the insensitive front region 520A suitably enables a realistic modelling of the actual force conditions in the plug contact. For example, in situations in which spring forces from plug connections occur at different positions along the longitudinal direction L, the important region which is to be measured can possibly be situated at a set-back location, while on the other hand the conditions must be modelled as identically as possible to the actual factors. In this manner, the force component arising at the set-back position is measured without giving rise to a falsification through the spring forces which arise in the front region, but which are present in reality and influence the overall behaviour.

In the case of measuring elements without this passive tip, as has been described previously for instance, only the total force F₁ + F₂ can be measured in the constellation of forces F₁, F₂ shown in Fig. 5. If both forces are meant to be ascertained, such a measuring element, for example, can be additionally used in order to measure this total force in a further measuring process. From the two measurement results, i.e. from F₂, which is determined with the measuring element 500, and F₁ + F₂; which can be determined with the further measuring element without a passive tip, it is then possible to ascertain F₁ by calculation.

Fig. 6 shows an embodiment in a schematic perspective depiction, with only measuring arm systems 605A, 605B, 605C, 605D being depicted, which each have a first measuring arm 610 and a second measuring arm 620. Here too, it should be noted that the measuring arm systems 605A, ..., 605D shown in Fig. 6 can be employed in conjunction with any of the previously described measuring elements 100, 200, 400 and measuring elements which are still to be described. In the depicted embodiment, several measuring arm systems, for example with two, three, four or more measuring arm systems, are therefore arranged in a lateral direction W perpendicular to the longitudinal direction L, so that a contact of several of the measuring arm systems 605A, ..., 605D with a respective force component which is to be measured can take place simultaneously. In an application example, for instance a plug connection with several mechanical independent plug-in elements is charted with regard to the respective contact forces. For this purpose, the spacings in the lateral direction W are selected such that a correspondence to the respective lateral spacings in the measurement is achieved. In advantageous embodiments, each of the measuring arm systems 605A, ..., 605D is mechanically coupled to an assigned separate deformation section, wherein the corresponding deformation section may be designed as described in connection with the measuring elements 100, 200, 400. In this manner, the individual force components registered in the respective measuring arm systems 605A, ..., 605D can be output to an appropriate evaluation unit as a signal and evaluated separately. If required, the individual forces to be measured may possibly be added together during the evaluation in order to thus obtain a total force. If a "mechanical" addition of two or more force components is desired, corresponding two or more measuring arm systems 605A, ..., 605D can exert an effect on a single deformation section in order to thus ascertain the corresponding sum force.

Conventionally, the following approach is adopted in the case of plug-in contacts with many parallel contact points: a narrow measuring element and large passive metal part, which presses the other springs on, is inserted because the entire spring formation is interrelated and only acts dependently. It is then necessary to insert many different passive metal parts in order to separate the forces. If it is desired to measure the force upon initial insertion, this is only possible with several parts. However, this approach is frequently not permissible according to the test regulations. Furthermore, a plug-in contact wears out when it is plugged in a number of times. The separated forces from several measurements thus never indicate the same situation with regard to ageing. Arranging the measuring arm systems 605A, ..., 605D in parallel, with the possibility of simultaneous measurement, allows these disadvantages to be avoided.

Fig. 7 schematically shows a side view of a part of a measuring element, wherein a part of a connection region 725 is shown, which is coupled with a measuring arm which is not shown. Furthermore, a part of a deformation section 730 is depicted which is ultimately coupled to the measuring arm, not shown, via the connection region 725. It is also the case for the embodiment depicted in Fig. 7 that this can be combined with all measuring elements hitherto described and described below. The connection region 725 in particular is suitably designed such that a high degree of response sensitivity, resolution and exactness is achieved, for example by providing appropriate cavities or material inserts 726A, 726B. In this manner, it is for example possible to notably abide by the criteria of the measuring system analysis corresponding to method 1 and method 3, i.e. for example for automated measuring systems. As has already been explained, appropriate simulation calculations can also be performed taking into account the one or more connection regions 725, in order to adapt the mechanical behaviour of the measuring element notably to the corresponding application, so that in particular the criteria of the measuring system analysis can be fulfilled. In this manner, there also arises the possibility that the measurement results obtained by the measuring element according to the invention can be used to standardise or at least to exactly classify the quality and the behaviour of the measuring objects.

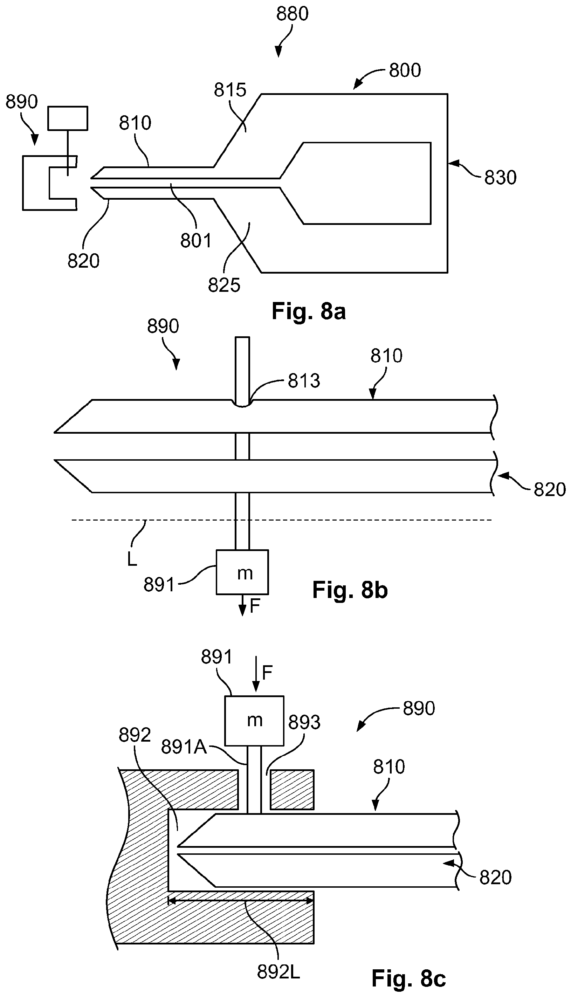

Fig. 8a schematically shows a side view of a measuring system 880 according to a further clear embodiment. The measuring system comprises a measuring element 800 with a first measuring arm 810, a second measuring arm 820 which, in the unstressed state, form a spacing 801 therebetween, and with a deformation section 830, which is mechanically coupled to the measuring arms 810, 820 via corresponding connection regions 815, 825. The same criteria apply with regard to the measuring element 800 as have already been described for the respective embodiments. In other words, the measuring element 800 can be installed in the same manner as the measuring element 100 or the measuring element 200 or the measuring element 400 or can also be installed such that one or more features of one of the measuring elements in the preceding embodiments are combined in the measuring element 800. It is in particular also the case for the measuring arms 810, 820 that they are suitably formed as also described in the preceding embodiments. The same applies to the connection regions 815, 825 and to the deformation section 830. In other words, in advantageous embodiments, the measuring element 800 is, with an optimised geometric design, for example on the basis of simulation calculations, suitably adapted to the respective application and/or there are several measurement ranges realised in the element 800 and/or different values are realised for the total thickness of the system made up of measuring arms 810, 820 in the element 800 and/or the measuring arms are firmly connected to one another on one side and/or the cross-sectional shapes of the measuring arms 810, 820 are designed as described previously in connection with Figs. 3a to 3d and/or the measuring arms are designed as explained in relation to Fig. 5 and/or there are several measuring arm systems provided, as is explained for example in connection with Fig. 6. In the same manner, the connection regions 815, 825 can be structured as described in connection with Fig. 7.

The system 800 further comprises a calibration unit 890 which is provided in one embodiment as a separate component and that, in addition or alternatively, is installed as a component integrated in the measuring element 800 in a further embodiment.

Fig. 8b shows the calibration unit 890 in a variant in which it is integrated in the element 800, for example in the form of a positioning element 813 which is provided at a precisely specified position along the longitudinal direction L at the first measuring arm 810 (as shown) and/or the second measuring arm 820. The positioning element 813 is provided in any suitable form, for example in the form of a relief or depression, in order to thus receive a support of a positioning weight 891 which is thus exactly positioned in the longitudinal direction L. For this purpose, the measuring element 800 for example is oriented such that its measuring arms 810, 820 are arranged horizontally, as a result of which, when the calibration mass 891 is applied, a force component acting perpendicularly to the longitudinal direction L occurs at a precisely specified position, i.e. the position of the positioning element 813, so that it is possible to calibrate the response behaviour of the deformation section 830 (Fig. 8a) through the known size of the calibration force 891. In other variants, a calibration length element, which is not shown, is applied in order to cause a precisely defined deflection which is then used to calibrate the deformation section 830. Both variants can also be employed together.

Fig. 8c schematically shows a side view of a further embodiment of the calibration unit 890, which is provided as a separate component. In the depicted embodiment, the calibration unit 890 has a cap shape or a cup shape in which there is formed a recess 892 such that the first and second measuring arms 810, 820 can be introduced in a precisely defined manner. For this purpose, the recess 892 possesses a suitable width, i.e. a dimension in the direction perpendicular to the plane of projection of Fig. 8c, and a suitable thickness, i.e. a suitable dimension in the direction perpendicular to the longitudinal direction L and in particular has a given length dimension 892L, so that when the measuring arm system strikes the rear edge of the recess 892, a precisely defined length of the measuring arm system is introduced into the recess 892. This cap can be understood as a calibration length element because a precisely defined deflection is caused. In addition or alternatively, the calibration unit 890 has an aperture 893 which is positioned precisely along the longitudinal direction L so that a calibration force 891, for instance in the form of a weight, can exert an effect on the measuring arm through the aperture 893 via an appropriate pressure rod 891A. As a result, the position of the point of action and the size of the measuring force 891 are precisely known and can thus also be used to calibrate the measuring element 800.

It should further be noted that for all described embodiments a suitable support or a housing is provided for the measuring element, so that a mechanically robust arrangement is obtained. For the sake of simplicity, such a housing is not shown. Furthermore, appropriate electronic, optoelectronic, micromechanically electronic components and the like, which can serve to acquire signals, evaluate signals or prepare signals, can be accommodated partially or fully at a suitable location in the measuring element itself and/or in an appropriate housing at a suitable location. For example, suitable semiconductor chips or other suitable substrates with optical, electronic, mechanical components, which are assembled thereon can be accommodated at a suitable location and also the respective supply lines are suitably provided in the form of wires, conductive paths, and the like at suitable locations in the measuring element and/or the housing. In other words, significant steps of a corresponding evaluation of signals can be performed in the measuring element or in an associated housing itself, and an appropriately prepared signal can be transmitted to a further electronic evaluation system, for instance a computer, and the like. In other variants, only substantially unprocessed signals are transmitted to the electronic evaluation system. A transmission of signals can take place for example through wired connections or also through wireless communication channels such that a high degree of flexibility is achieved in particular when a measuring system is applied with the measuring element according to the invention.

### List of reference numbers

- 180, 280, 480, 880: measuring system
- 100, 200, 400, 800: measuring element
- 110, 210, 410, 810: measuring arm (first measuring arm)
- 120, 220, 420, 820: measuring arm (second measuring arm)
- 110A, 210A: front region of the first measuring arm
- 120A, 220A: front region of the second measuring arm
- 110B, 210B: rear region of the first measuring arm
- 120B, 220B: rear region of the second measuring arm
- 130, 230, 430, 830: deformation section
- 130A: facing side of the deformation section
- 130B: facing-away side of the deformation section
- 130L: longitudinal dimension of the deformation section
- 130D: width of the deformation section
- 131: edges or rims of the deformation section
- 140, 141, 142, 143, 144, 145, 146, 147, 148: transformer units
- 101, 201, 401, 501, 801: spacing
- 115, 215, 815: connection region for the first measuring arm
- 125, 225, 425, 725, 825: connection region for second measuring arm
- 190, 290, 490, 890: calibration unit
- 211: contact face
- 250, 251: detecting unit
- 202, 202A: intermediate space
- 312: surface of the first measuring arm
- 322: surface of the second measuring arm
- 322N: direction of a part of the surface
- 404: total thickness
- 410D: thickness of the first measuring arm
- 420D: thickness of the second measuring arm
- 410F: supplementary thickness in a region of the measuring arm
- 445: actuator element
- 605A, ..., 605D: measuring arm system
- 726A, 726B: material recess
- 813: positioning element
- 891: calibration force or calibration weight
- 891A: pressure rod
- 893: aperture in the calibration unit
- 892: recess in the calibration unit
- 892L: length of the recess

## Claims

1. A measuring element (100, 200, 400, 800) for registering forces, with
a first measuring arm (210) which extends in a longitudinal direction (L) of the measuring element, with a front region (210A) and a rear region (210B),
a second measuring arm (220) which extends in the longitudinal direction, with a front region (220A) and a rear region (220B), wherein the first and the second measuring arm can be deflected relative to one another in a direction perpendicular to the longitudinal direction (L),
a deformation section (230), which connects the first measuring arm (210) and the second measuring arm (220) to one another in an elastically deformable manner,
an actuator element (445) which is configured to controllably achieve an elongation/contraction in a certain region of the measuring element,
wherein the measuring element has a first measurement range which is established in that when a force which is to be measured through relative deflection of the first and second measuring arms (210, 220) and which is the same or smaller than a first threshold exerts an effect, the first measuring arm (210) and the second measuring arm (220) remain spaced apart from one another and
the measuring element has a second measurement range which is established in that when a force which is to be measured through relative deflection of the first and second measuring arms (210, 220) and which is greater than the first threshold exerts an effect, the front region (210A) of the first measuring arm (210) is in contact with the front region (220A) of the second measuring arm (220),
and optionally
wherein the rear regions (210B, 220B) of the first and of the second measuring arm can be deflected relative to one another in a direction perpendicular to the longitudinal direction (L) and the front regions (210A, 220A) are firmly connected to one another, and
wherein a detecting device (251) is provided outside the deformation section (230) for registering a size of an intermediate space (202, 202A), which is formed by the rear regions (210B, 220B) of the first and second measuring arms (210, 220).

2. The measuring element according to Claim 1, wherein the measuring element has a third measurement range which is established in that when a force which is to be measured through relative deflection of the first and second measuring arms (210, 220) and which is greater than the first threshold and equal to or greater than a second threshold that is above the first threshold exerts an effect, the front region (210A) of the first measuring arm is in contact with the front region (220A) of the second measuring arm and a size of an intermediate space (202, 202A) formed by a rear region (210B) of the first measuring arm and a rear region (220B) of the second measuring arm is characteristic of the force which is to be measured.

3. The measuring element according to Claims 1 or 2, wherein there is provided a first detecting device (250) which is formed to register the contact of the front region (210A) of the first measuring arm with the front region (220A) of the second measuring arm.

4. The measuring element according to any one of Claims 1 to 3, which further has one or more transducer units (140, 141, 142, 143, 144, 145, 146, 147, 148) which are arranged on the deformation section (230) and which respond to deformation.

5. The measuring element according to any one of Claims 1 to 4, wherein a geometric design of the deformation section, with given material characteristics, is modelled on a geometric design ascertained by simulating the deformation behaviour for a given range of forces which must be measured through relative deflection of the first and second measuring arms.

6. The measuring element according to any one of Claims 1 to 5, wherein a first surface (312) of the first measuring arm is opposite a second surface (322) of the second measuring arm, the first and the second surface (312, 322) are formed complementary to one another and have surface regions with a surface normal (322N), which form an angle to the relative deflection.

7. The measuring element according to any one of Claims 1 to 6, wherein a total thickness (404) of the first and second measuring arms, in a state without the exertion of a force that is to be measured, is varied and/or variable.

8. The measuring element according to the preceding claim, wherein an interaction region has a varying total thickness which is caused by a varying thickness of the first and/or of the second measuring arm (410D, 420D) in the region of +/- 200 µm.

9. The measuring element according to claim 8, wherein the interaction region has at least three regions, each with a different total thickness.

10. The measuring element according to one of Claims 1 to 9, wherein in a first connection region (415), which is coupled with the first measuring arm (410), and/or a second connection region (425), which is coupled with the second measuring arm (420), and/or the deformation section (430) is provided with one or more actuator elements (445) with adjustable elongation/contraction.

11. The measuring element according to Claim 10, wherein one of the one or more actuator elements is able to be used as a sensor for providing a signal which is able to be used for evaluation and/or calibration.

12. A measuring system for registering forces, with
a measuring element according to any one of Claims 1 to 11 and
a calibration unit which can be coupled with the measuring element and which, in the coupled state, fixes a position at the first and/or second measuring arm to be loaded with a calibration mass or to apply a calibration length element.

13. A method of providing a measuring element according to any one of Claims 1 to 11 with the steps:
selecting a material for the production of at least the deformation section,
establishing at least one measurement range for forces to be measured through relative deflection of the first and second measuring arms,
ascertaining a simulated geometric design of the deformation section by taking material characteristics of the selected material and of the established measurement range as the basis by carrying out a simulation calculation, and
producing the deformation section from the selected material by modelling the simulated geometric design.

14. The method according to Claim 13, which further comprises: if the measuring element has one or more transducer units (140, 141, 142, 143, 144, 145, 146, 147, 148) which are arranged on the deformation section (230) and which respond to deformation, ascertaining a position of at least one transducer unit of the one or more transducer units on the deformation section by means of the simulation calculation.

15. The method according to Claims 13 or 14, wherein the simulation calculation is performed according to the finite element method.

## Patentansprüche

1. Ein Messelement (100, 200, 400, 800) zur Erfassung von Kräften, mit
einem ersten Messarm (210), der sich in einer Längsrichtung (L) des Messelements erstreckt, mit einem vorderen Bereich (210A) und einem hinteren Bereich (210B),
einem zweiten Messarm (220), der sich in Längsrichtung erstreckt, mit einem vorderen Bereich (220A) und einem hinteren Bereich (220B), wobei der erste und der zweite Messarm in einer Richtung senkrecht zur Längsrichtung (L) relativ zueinander auslenkbar sind,
einen Deformationsabschnitt (230), der den ersten Messarm (210) und den zweiten Messarm (220) elastisch verformbar miteinander verbindet,
ein Aktuator-Element (445), das dazu ausgebildet ist, in einem bestimmten Bereich des Messelementes eine Dehnung/Kontraktion steuerbar zu erreichen,
wobei das Messelement einen ersten Messbereich aufweist, der dadurch festgelegt ist, dass bei Einwirkung einer durch relative Auslenkung des ersten und zweiten Messarms (210, 220) zu messenden Kraft, die gleich oder kleiner als eine erste Schwelle ist, der erste Messarm (210) und der zweite Messarm (220) voneinander beabstandet bleiben und
das Messelement einen zweiten Messbereich aufweist, der dadurch festgelegt ist, dass der vordere Bereich (210A) des ersten Messarms (210) mit dem vorderen Bereich (220A) des zweiten Messarms (220) in Kontakt steht, wenn eine durch relative Auslenkung des ersten und zweiten Messarms (210, 220) zu messende Kraft wirkt, die größer ist als die erste Schwelle,
und wahlweise
wobei die hinteren Bereiche (210B, 220B) des ersten und des zweiten Messarms in einer Richtung senkrecht zur Längsrichtung (L) relativ zueinander auslenkbar sind und die vorderen Bereiche (210A, 220A) fest miteinander verbunden sind, und
wobei außerhalb des Deformationsabschnitts (230) eine Detektionsvorrichtung (251) zum Erfassen einer Größe eines Zwischenraums (202, 202A) vorgesehen ist, der durch die hinteren Bereiche (210B, 220B) des ersten und zweiten Messarms (210, 220) gebildet wird.

2. Das Messelement nach Anspruch 1, wobei das Messelement einen dritten Messbereich aufweist, der dadurch festgelegt ist, dass bei Einwirkung einer durch relative Auslenkung des ersten und zweiten Messarms (210, 220) zu messenden Kraft, die größer als der erste Schwellenwert und gleich oder größer als ein zweiter, über dem ersten Schwellenwert liegender Schwellenwert ist der vordere Bereich (210A) des ersten Messarms mit dem vorderen Bereich (220A) des zweiten Messarms in Kontakt steht und eine Größe eines Zwischenraums (202, 202A), der von einem hinteren Bereich (210B) des ersten Messarms und einem hinteren Bereich (220B) des zweiten Messarms gebildet wird, für die zu messende Kraft charakteristisch ist.

3. Das Messelement nach Anspruch 1 oder 2, **dadurch gekennzeichnet, dass** eine erste Erkennungsvorrichtung (250) vorgesehen ist, die ausgebildet ist, um den Kontakt des vorderen Bereichs (210A) des ersten Messarms mit dem vorderen Bereich (220A) des zweiten Messarms zu registrieren.

4. Das Messelement nach einem der Ansprüche 1 bis 3, das ferner eine oder mehrere Messwertaufnehmer (140, 141, 142, 143, 144, 145, 146, 147, 148) aufweist, die an dem Verformungsabschnitt (230) angeordnet sind und auf Verformung ansprechen.

5. Das Messelement nach einem der Ansprüche 1 bis 4, wobei eine geometrische Gestaltung des Deformationsabschnitts bei gegebenen Materialeigenschaften auf eine durch Simulation des Verformungsverhaltens ermittelte geometrische Gestaltung für einen gegebenen Bereich von Kräften, die durch relative Auslenkung des ersten und zweiten Messarms gemessen werden müssen, nachgebildet ist.

6. Das Messelement nach einem der Ansprüche 1 bis 5, wobei eine erste Fläche (312) des ersten Messarms einer zweiten Fläche (322) des zweiten Messarms gegenüberliegt, die erste und die zweite Fläche (312, 322) komplementär zueinander ausgebildet sind und Oberflächenbereiche mit einer Flächennormalen (322N) aufweisen, die einen Winkel zur Relativauslenkung bilden.

7. Das Messelement nach einem der Ansprüche 1 bis 6, wobei eine Gesamtdicke (404) des ersten und zweiten Messarms in einem Zustand ohne Ausübung einer zu messenden Kraft variiert und/oder veränderbar ist.

8. Das Messelement nach dem vorhergehenden Anspruch, wobei ein Interaktionsbereich eine variierende Gesamtdicke aufweist, die durch eine variierende Dicke des ersten und/oder des zweiten Messarms (410D, 420D) im Bereich von +/- 200 µm bedingt ist.

9. Das Messelement nach Anspruch 8, wobei der Interaktionsbereich mindestens drei Bereiche mit einer jeweils unterschiedlichen Gesamtdicke aufweist.

10. Das Messelement nach einem der Ansprüche 1 bis 9, wobei in einem ersten Verbindungsbereich (415), der mit dem ersten Messarm (410) gekoppelt ist, und/oder einem zweiten Verbindungsbereich (425), der mit dem zweiten Messarm (420) gekoppelt ist, und/oder der Deformationsabschnitt (430) mit einem oder mehreren Betätigungselementen (445) mit einstellbarer Dehnung/Kontraktion versehen ist.

11. Das Messelement nach Anspruch 10, wobei eines der einen oder mehreren Betätigungselemente als Sensor zur Bereitstellung eines Signals verwendet werden kann, das zur Auswertung und/oder Kalibrierung verwendet werden kann.

12. Ein Messsystem zur Erfassung von Kräften, mit
einem Messelement nach einem der Ansprüche 1 bis 11 und
einer mit dem Messelement koppelbaren Kalibriereinheit, die im gekoppelten Zustand eine Position am ersten und/oder zweiten Messarm zur Beaufschlagung mit einer Kalibriermasse oder zum Aufbringen eines Kalibrierlängenelements festlegt.

13. Ein Verfahren zur Bereitstellung eines Messelements nach einem der Ansprüche 1 bis 11 mit den Schritten:
Auswählen eines Materials für die Herstellung zumindest des Deformationsabschnitts,
Festlegen mindestens eines Messbereichs für zu messende Kräfte durch relative Auslenkung des ersten und zweiten Messarms,
Ermitteln einer simulierten geometrischen Gestaltung des Deformationsabschnitts unter Zugrundelegung von Materialeigenschaften des ausgewählten Materials und des festgelegten Messbereichs durch Durchführen einer Simulationsrechnung, und
Herstellen des Deformationsabschnitts aus dem ausgewählten Material durch Modellierung der simulierten geometrischen Gestaltung.

14. Das Verfahren nach Anspruch 13, das ferner aufweist: wenn das Messelement eine oder mehrere auf dem Deformationsabschnitt (230) angeordnete, auf Verformung ansprechende Messwertaufnehmer (140, 141, 142, 143, 144, 145, 146, 147, 148) aufweist, Ermitteln einer Position von mindestens einem Messwertaufnehmer des einen oder mehreren Messwertaufnehmer auf dem Deformationsabschnitt mittels der Simulationsrechnung.

15. Das Verfahren nach Anspruch 13 oder 14, wobei die Simulationsrechnung nach der Finite-Elemente-Methode durchgeführt wird.

## Revendications

1. Élément de mesure (100, 200, 400, 800) permettant l'enregistrement de forces, ayant
un premier bras de mesure (210) qui s'étend dans une direction longitudinale (L) de l'élément de mesure, avec une région avant (210A) et une région arrière (210B),
un second bras de mesure (220) qui s'étend dans la direction longitudinale, avec une région avant (220A) et une région arrière (220B), dans lequel le premier et le second bras de mesure peuvent être déviés l'un par rapport à l'autre dans une direction perpendiculaire à la direction longitudinale (L),
une section de déformation (230), qui relie le premier bras de mesure (210) et le second bras de mesure (220) l'un à l'autre de manière élastiquement déformable,
un élément d'actionnement (445) qui est configuré pour réaliser de manière contrôlable un allongement/une contraction dans une certaine région de l'élément de mesure,
dans lequel l'élément de mesure présente une première plage de mesure qui est établie de sorte que, lorsqu'une force qui doit être mesurée par la déviation relative des premier et second bras de mesure (210, 220) et qui est inférieure ou égale à un premier seuil exerce un effet, le premier bras de mesure (210) et le second bras de mesure (220) restent espacés l'un de l'autre et
l'élément de mesure présente une deuxième plage de mesure qui est établie de sorte que, lorsqu'une force qui doit être mesurée par la déviation relative des premier et second bras de mesure (210, 220) et qui est supérieure au premier seuil exerce un effet, la région avant (210A) du premier bras de mesure (210) soit en contact avec la région avant (220A) du second bras de mesure (220),
et éventuellement
dans lequel les régions arrière (210B, 220B) des premier et second bras de mesure peuvent être déviées l'une par rapport à l'autre dans une direction perpendiculaire à la direction longitudinale (L) et les régions avant (210A, 220A) sont solidement reliées l'une à l'autre, et
dans lequel un dispositif de détection (251) est prévu à l'extérieur de la section de déformation (230) pour enregistrer une taille d'un espace intermédiaire (202, 202A), qui est formé par les régions arrière (210B, 220B) des premier et second bras de mesure (210, 220).

2. Élément de mesure selon la revendication 1, dans lequel l'élément de mesure présente une troisième plage de mesure qui est établie de sorte que, lorsqu'une force qui doit être mesurée par la déviation relative des premier et second bras de mesure (210, 220) et qui est supérieure au premier seuil et supérieure ou égale à un second seuil qui est supérieur au premier seuil exerce un effet, la région avant (210A) du premier bras de mesure soit en contact avec la région avant (220A) du second bras de mesure et une taille d'un espace intermédiaire (202, 202A) formé par une région arrière (210B) du premier bras de mesure et une région arrière (220B) du second bras de mesure soit caractéristique de la force à mesurer.

3. Élément de mesure selon les revendications 1 ou 2, dans lequel on prévoit un premier dispositif de détection (250) qui est formé pour enregistrer le contact de la région avant (210A) du premier bras de mesure avec la région avant (220A) du second bras de mesure.

4. Élément de mesure selon l'une quelconque des revendications 1 à 3, qui a en outre une ou plusieurs unités de transducteur (140, 141, 142, 143, 144, 145, 146, 147, 148) qui sont agencées sur la section de déformation (230) et qui réagissent à la déformation.

5. Élément de mesure selon l'une quelconque des revendications 1 à 4, dans lequel une conception géométrique de la section de déformation, avec des caractéristiques matérielles données, est modélisée sur une conception géométrique déterminée en simulant le comportement de déformation pour une plage donnée de forces qui doivent être mesurées par la déviation relative des premier et second bras de mesure.

6. Élément de mesure selon l'une quelconque des revendications 1 à 5, dans lequel une première surface (312) du premier bras de mesure est opposée à une seconde surface (322) du second bras de mesure, les première et seconde surfaces (312, 322) sont formées de manière complémentaire l'une par rapport à l'autre et présentent des régions de surface avec une normale à la surface (322N) qui forment un angle par rapport à la déviation relative.

7. Élément de mesure selon l'une quelconque des revendications 1 à 6, dans lequel une épaisseur totale (404) des premier et second bras de mesure, dans un état sans application d'une force qui doit être mesurée, varie et/ou est variable.

8. Élément de mesure selon la revendication précédente, dans lequel une région d'interaction présente une épaisseur totale variable qui est causée par une variation de l'épaisseur du premier et/ou du second bras de mesure (410D, 420D) dans la région de +/- 200 µm.

9. Élément de mesure selon la revendication 8, dans lequel la région d'interaction présente au moins trois régions, chacune avec une épaisseur totale différente.

10. Élément de mesure selon l'une des revendications 1 à 9, dans lequel, dans une première région de connexion (415) qui est couplée au premier bras de mesure (410) et/ou dans une seconde région de connexion (425) qui est couplée au second bras de mesure (420), et/ou la section de déformation (430) est pourvue d'un ou de plusieurs éléments d'actionnement (445) à allongement/contraction réglable.

11. Élément de mesure selon la revendication 10, dans lequel l'un du ou des plusieurs éléments d'actionnement peut être utilisé comme capteur pour fournir un signal qui peut être utilisé pour l'évaluation et/ou l'étalonnage.

12. Système de mesure permettant l'enregistrement de forces, ayant un élément de mesure selon l'une quelconque des revendications 1 à 11 et une unité d'étalonnage qui peut être couplée à l'élément de mesure et qui, à l'état couplé, fixe une position au niveau du premier et/ou du second bras de mesure pour être chargée avec une masse d'étalonnage ou pour appliquer un élément de longueur d'étalonnage.

13. Procédé de fourniture d'un élément de mesure selon l'une quelconque des revendications 1 à 11, ayant les étapes :
sélectionner un matériau pour la production d'au moins la section de déformation,
établir au moins une plage de mesure pour les forces à mesurer par la déviation relative des premier et second bras de mesure,
déterminer une conception géométrique simulée de la section de déformation en prenant les caractéristiques matérielles du matériau sélectionné et la plage de mesure établie comme base en effectuant un calcul de simulation, et
produire la section de déformation à partir du matériau sélectionné en modélisant la conception géométrique simulée.

14. Procédé selon la revendication 13, qui comprend en outre : si l'élément de mesure a une ou plusieurs unités de transducteur (140, 141, 142, 143, 144, 145, 146, 147, 148) qui sont agencées sur la section de déformation (230) et qui réagissent à la déformation, la détermination d'une position d'au moins une unité de transducteur de la ou des plusieurs unités de transducteur sur la section de déformation au moyen du calcul de simulation.

15. Procédé selon les revendications 13 ou 14, dans lequel le calcul de simulation est réalisé selon la méthode des éléments finis.
